# EUROPÄISCHE PATENTANMELDUNG

(11) **EP 0 698 641 A1**
(43) Veröffentlichungstag der Anmeldung: **28.02.1996**
(21) Anmeldenummer: 95111220.0
(22) Anmeldetag: 18.07.1995
(51) Int. Cl.: C09B 44/10

(54) **Kationische 1,3,4-Thiadiazolfarbstoffe**

(30) Priorität: 29.07.1994 DE 4426941
(71) Anmelder: BAYER AG, D-51368 Leverkusen (DE)
(72) Erfinder: Giera, Henry, Dr., D-51429 Bergisch Gladbach (DE); Berneth, Horst, Dr., D-51373 Leverkusen (DE)

(57) **Zusammenfassung**

Kationische 1,3,4-Thiadiazolfarbstoffe der Formel (I) 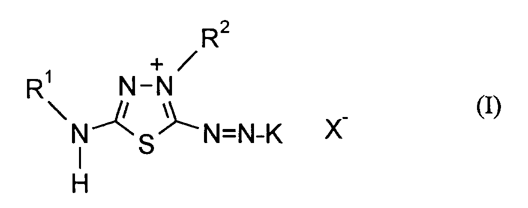
in der
- R¹: C₆-C₁₀-Aryl und
- R²: C₁-C₁₂-Alkyl bedeuten
mit der Bedingung, daß R² nicht für Methyl steht, wenn R¹ Phenyl oder 4-Methoxyphenyl bedeutet,
- K: den Rest einer Kupplungskomponente und
- X⁻: ein Anion bedeuten,
wobei alle vorhandenen Alkyl- und Aryl-Reste gegebenenfalls mit nichtionogenen Substituenten und/oder Carboxylgruppen substituiert sein können, deren Herstellung und deren Verwendung.

## Beschreibung

In der FR 1 199 411 werden einzelne 1,3,4-Thiadiazolfarbstoffe beschrieben.

Die vorliegende Erfindung betrifft kationische 1,3,4-Thiadiazolfarbstoffe der Formel (I) 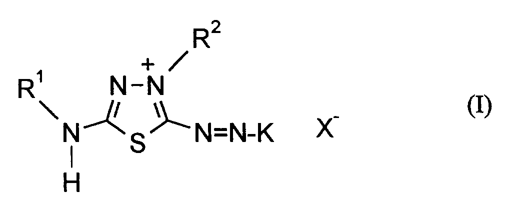
in der
- R¹: C₆-C₁₀-Aryl und
- R²: C₁-C₁₂-Alkyl bedeuten
mit der Bedingung, daß R² nicht für Methyl steht, wenn R¹ Phenyl oder 4-Methoxyphenyl bedeutet,
- K: den Rest einer Kupplungskomponente und
- X⁻: ein Anion bedeuten,
wobei alle vorhandenen Alkyl- und Aryl-Reste gegebenenfalls mit nichtionogenen Substituenten und/oder Carboxylgruppen substituiert sein können,
ein Verfahren zu deren Herstellung und deren Verwendung.

Nichtionogene Substituenten sind beispielsweise die in der Farbstoffchemie üblichen nicht dissoziierenden Substituenten wie Cyano, Hydroxy, Fluor, Chlor, Brom, Nitro, C₁-C₁₂-Alkyl, C₁-C₁₂-Alkenyl, C₁-C₁₂-Alkinyl, C₆-C₁₀-Aryl, C₁-C₁₂-Acyl, Amino, Mono- und Di-C₁-C₁₂-alkylamino, C₁-C₁₂-Acylamino, C₆-C₁₀-Arylamino, C₁-C₁₂-Alkoxy, C₆-C₁₀-Aryloxy, und C₁-C₆-Acyloxy.

Acylreste sind beispielsweise Formyl, C₁-C₁₂-Alkylcarbonyl, C₁-C₁₂-Alkenylcarbonyl, C₆-C₁₀-Arylcarbonyl, C₁-C₁₂-Alkoxycarbonyl, C₆-C₁₀-Aryloxycarbonyl, Aminocarbonyl, Mono- und Di-C₁-C₁₂-alkylaminocarbonyl, Mono- und Di-C₆-C₁₀-Arylaminocarbonyl, C₁-C₁₂-Alkylsulfonyl, C₆-C₁₀-Arylsulfonyl, Aminosulfonyl, Mono- und Di-C₁-C₁₂-alkylaminosulfonyl und Mono- und Di-C₆-C₁₀-Arylaminosulfonyl.

Alkylreste, auch abgewandelte, wie z.B. Alkoxy- und Aralkylreste, sind vorzugsweise solche mit 1 bis 8, insbesondere 1 bis 4 C-Atomen. Sie können auch verzweigt sein. Unter Alkylresten werden auch Cycloalkylreste verstanden, beispielsweise solche mit 4 bis 7, vorzugsweise 5 oder 6 C-Atomen.

Alkenylreste sind vorzugsweise solche mit 2 bis 6, vorzugsweise 2 oder 3 C-Atomen.

Arylreste, auch solche in Aralkylresten, sind vorzugsweise Phenylreste, die gegebenenfalls durch 1 bis 3 der oben beschriebenen nichtionogenen Reste und/oder eine Carboxylgruppe substituiert sein können. Zwei nichtionogene Reste in benachbarten Positionen können auch gemeinsam einen Ring bilden.

Als Anionen sind farblose, organische und anorganische Anionen bevorzugt, beispielsweise Fluorid, Chlorid, Bromid, Iodid, Perchlorat, Tetrafluoroborat, Hydroxid, Hydrogensulfat, Sulfat, Dihydrogenphosphat, Hydrogenphosphat, Phosphat, Hydrogencarbonat, Carbonat, Methylsulfat, Ethylsulfat, Cyanat, Thiocyanat, Tri- und Tetrachlorozinkat, und Anionen gesättigter oder ungesättigter aliphatischer, cycloaliphatischer, aromatischer oder heterocyclischer Carbon- und Sulfonsäuren wie Formiat, Acetat, Hydroxyacetat, Cyanacetat, Propionat, Hydroxypropionat, Oxalat, Citrat, Lactat, Tartrat, das Anion der Cyclohexancarbonsäure, Phenylacetat, Benzoat, das Anion der Nikolinsäure, Methansulfonat, Ethansulfonat, Benzolsulfonat, Chlorbenzolsulfonat, Toluolsulfonat und Hexafluorsilikat. Wenn es sich um mehrwertige Anionen handelt, z.B. um Sulfat oder Oxalat, dann steht in Formel (I) X⁻ für ein Äquivalent solch eines mehrwertigen Anions.

Bevorzugte Farbstoffe entsprechen der Formel (I), worin R² und X⁻ die oben angegebene Bedeutung haben und
- R¹: Phenyl oder Naphthyl bedeutet, die gegebenenfalls jeweils mit maximal 3 Substituenten aus der Gruppe C₁-C₁₂-Alkyl, C₁-C₁₂-Alkenyl, C₁-C₁₂-Alkinyl, Benzyl, Phenethyl, Phenyl, Fluor, Chlor, Brom, Cyano, Nitro, Hydroxy, C₁-C₁₂-Alkyloxy, C₆-C₁₀-Aryloxy, Amino, Mono-C₁-C₁₂-alkylamino, Di-C₁-C₁₂-alkylamino, C₆-C₁₀-Arylarnino, C₁-C₁₂-Acylamino, C₁-C₁₂-Acyl, C₁-C₁₂-Acyloxy, C₁-C₁₂-Alkylsulfonyl, C₆-C₁₀-Arylsulfonyl, Aminosulfonyl, Mono- und Di-C₁-C₁₂-alkylaminosulfonyl und Mono- und Di-C₆-C₁₀-Arylaminosulfonyl substituiert sein können, wobei zwei dieser Substituenten in benachbarten Positionen auch einen Ring bilden können, und
- K: einen Rest der Formel (II) oder (III) 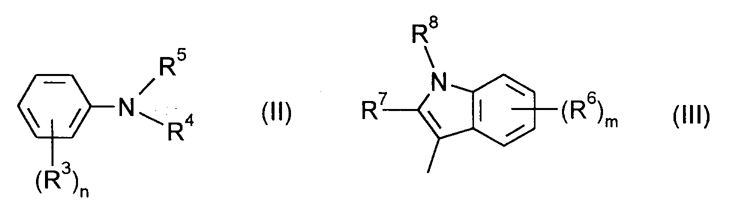 darstellt, in denen
- R³: Wasserstoff, Fluor, Chlor, Brom, Cyano, Nitro, Hydroxy, C₁-C₁₂-Alkyl, C₁-C₁₂-Alkoxy oder C₁-C₁₂-Alkoxycarbonyl und
- R⁴ und R⁵: unabhängig voneinander jeweils Wasserstoff, C₁-C₁₂-Alkyl, C₆-C₁₀-Aryl, Benzyl, Phenethyl, C₁-C₁₂-Alkenyl, Cyclo-C₄-C₇-alkyl, einen gegebenenfalls über eine Methylen- oder Ethylengruppe gebundenen Heterocyclus mit bis zu 2 Ringen und bis zu 3 Heteroatomen aus der Gruppe O, N und S oder
- R⁴ und R⁵: gemeinsam mit dem dazwischenliegenden Stickstoffatom einen Heterocyclus mit bis zu 2 Ringen und bis zu 4 Heteroatomen aus der Gruppe O, N und S und mindestens einem N-Atom bedeuten oder
- R³ und R⁴ und/oder R³ und R⁵: gemeinsam eine 2- oder 3-C-Atome enthaltende Brücke bedeuten können, die gegebenenfalls ein Sauerstoff-, Stickstoff- oder Schwefelatom enthält und gegebenenfalls mit 1 bis 3 Methyl- oder Ethylgruppen substituiert ist,
- R⁶: Wasserstoff, C₁-C₁₂-Alkyl, C₁-C₁₂-Alkoxy, Cyan, Halogen oder Nitro,
- R⁷ und R⁸: unabhängig voneinander Wasserstoff, C₁-C₁₂-Alkyl, C₆-C₁₀-Aryl, Benzyl oder Phenethyl und
- n und m: unabhängig voneinander 1 oder 2 bedeuten
wobei Alkyl-, Aryl-, Aralkyl-, Alkenyl-, Cycloalkyl und heterocyclische Reste gegebenenfalls mit nichtionogenen Substituenten oder Carboxylgruppen substituiert sein können,
mit der Bedingung, daß R² nicht für Methyl steht, wenn R¹ Phenyl oder 4-Methoxyphenyl bedeutet.

Halogen steht vorzugsweise für Fluor, Chlor oder Brom.

Bevorzugt sind weiterhin kationische 1,3,4-Thiadiazolfarbstoffe der Formel (I), in der
- R¹: einen Phenylrest bedeutet, der mit bis zu 3 Substituenten aus der Gruppe Cyano, Hydroxy, Halogen, Nitro, Amino, gegebenenfalls durch Hydroxy, Halogen, Cyano, Nitro, C₁-C₄-Alkoxy, Aminocarbonyl, C₁-C₄-Alkylcarbonyl, C₁-C₄-Acylamino oder C₁-C₄-Alkoxycarbonyl substituiertes C₁-C₈-Alkyl, Allyl, Ethinyl, gegebenenfalls durch Hydroxy, Halogen, Cyano, Nitro, C₁-C₄-Alkyl, C₁-C₄-Alkoxy, C₁-C₄-Acylamino, C₁-C₄-Alkoxycarbonyl, C₁-C₄-Alkylcarbonyl oder Aminocarbonyl substituiertes Benzyl, Phenethyl oder Phenyl, gegebenenfalls durch Hydroxy, Halogen, Cyano, Nitro, C₁-C₄-Alkoxy, C₁-C₄-Alkylcarbonyl, C₁-C₄-Acylamino, Aminocarbonyl oder C₁-C₄-Alkoxycarbonyl substituiertes C₁-C₈-Alkoxy oder C₆-C₁₀-Aryloxy, gegebenenfalls durch Hydroxy, Halogen, Cyano, Nitro, C₁-C₄-Alkoxy, C₁-C₄-Alkoxycarbonyl oder C₁-C₄-Alkylcarbonyl substituiertes Mono- oder Di-C₁-C₈-alkylamino oder C₆-C₁₀-Arylamino oder C₁-C₆-Acylamino, gegebenenfalls durch Hydroxy, Halogen, Cyano, Nitro, C₁-C₄-Alkoxy, C₁-C₄-Alkylcarbonyl oder C₁-C₄-Alkoxycarbonyl substituiertes C₁-C₈-Alkylcarbonyl oder C₆-C₁₀-Arylcarbonyl, gegebenenfalls durch Hydroxy, Halogen, Cyano, Nitro, C₁-C₄-Alkoxy, C₁-C₄-Alkylcarbonyl oder C₁-C₄-Alkoxycarbonyl substituiertes C₁-C₈-Monoalkylaminocarbonyl oder C₁-C₈-Dialkylaminocarbonyl oder Aminocarbonyl, gegebenenfalls durch Hydroxy, Halogen, Cyano, Nitro, C₁-C₄-Alkoxy, C₁-C₄-Alkylcarbonyl oder C₁-C₄-Alkoxycarbonyl substituiertes C₁-C₆-Alkylsulfonyl oder C₆-C₁₀-Arylsulfonyl oder Mono- oder Di-C₆-C₁₀-Arylaminosulfonyl oder Aminosulfonyl substituiert sein kann, wobei Substituenten in benachbarten Positionen auch gemeinsam einen Ring bilden können,
- R²: einen gegebenenfalls durch Hydroxy, Halogen, Cyan, Carboxyl, Aminocarbonyl, C₁-C₈-Monoalkylaminocarbonyl, C₁-C₈-Dialkylaminocarbonyl, C₁-C₄-Alkylsulfonyl oder C₁-C₄-Alkoxycarbonyl substituierten C₁-C₈-Alkylrest bedeutet,
- K: den Rest einer Kupplungskomponente der Formel (II) oder (III) ist, in der
- R³: in 2- und/oder 5-Stellung Wasserstoff, Halogen, Nitro, Cyano, einen gegebenenfalls durch Halogen, Cyan, Hydroxy, C₁-C₄-Alkoxy, Carboxyl, Aminocarbonyl, C₁-C₄-Alkylcarbonyl, C₁-C₄-Alkylsulfonyl oder C₁-C₄-Alkoxycarbonyl substituierten C₁-C₈-Alkylrest, einen gegebenenfalls durch Hydroxy, Halogen, Cyano, Nitro, C₁-C₄-Alkoxy, Carboxyl, Aminocarbonyl, C₁-C₄-Alkylcarbonyl oder C₁-C₄-Alkoxycarbonyl substituierten C₁-C₈-Alkoxyrest, einen gegebenenfalls durch Hydroxy, Halogen, Cyano, Nitro, C₁-C₄-Alkoxy, Carboxyl, Aminocarbonyl, C₁-C₄-Alkylcarbonyl oder C₁-C₄-Alkoxycarbonyl substituierten C₁-C₈-Acyloxyrest, einen gegebenenfalls durch Hydroxy, Halogen, Cyano, Nitro, C₁-C₄-Alkoxy, Carboxyl, Aminocarbonyl, C₁-C₄-Alkylcarbonyl oder C₁-C₄-Alkoxycarbonyl substituierten C₁-C₈-Alkoxycarbonylrest bedeutet,
- R⁴ und R⁵: unabhängig voneinander jeweils Wasserstoff, einen durch Halogen, Hydroxy, Cyano, Thiocyanato, Nitro, C₁-C₄-Alkoxy, C₆-C₁₀-Aryloxy, Carboxyl, Aminocarbonyl, C₁-C₈-Monoalkylaminocarbonyl, C₁-C₈-Dialkylaminocarbonyl, C₁-C₄-Alkoxycarbonyl, C₁-C₄-Alkylcarbonyl oder C₁-C₈-Acyloxy substituierten C₁-C₈-Alkylrest, einen gegebenenfalls durch Halogen, Cyano, Thiocyanato, Nitro, C₁-C₄-Alkoxy, C₆-C₁₀-Aryloxy, Carboxyl, Aminocarbonyl, C₁-C₈-Monoalkylaminocarbonyl, C₁-C₈-Dialkylaminocarbonyl, C₁-C₄-Alkoxycarbonyl, C₁-C₄-Alkylcarbonyl oder C₁-C₈-Acyloxy substituierten Benzyl- oder Phenethylrest oder einen Phenylrest bedeuten, der gegebenenfalls wie bei R¹ angegeben substituiert sein kann, oder
- R⁴ und/oder R⁵ mit R³: in m-Stellung zur Azobrücke zusammen mit dem Stickstoffatom verbunden sein kann und so insgesamt einen gegebenenfalls durch C₁-C₄-Alkyl substituierten Dihydroindol-, Tetrahydrochinolin-, Tetrahydrochinoxalin- oder Dihydro-1,4-benzoxazinring bilden, oder
- R⁴ und R⁵: zusammen mit dem dazwischenliegenden Stickstoffatom zu einem gegebenenfalls durch C₁-C₄-Alkyl substituierten Pyrrolidin-, Piperidin-, Morpholin- oder Piperazin-Ring verbunden sind,
- R⁶: in Position 5 und 6 Wasserstoff, Halogen, Nitro, Cyano, einen gegebenenfalls durch Halogen, Cyan, Hydroxy, C₁-C₄-Alkoxy, Carboxyl, Aminocarbonyl, C₁-C₄-Alkylcarbonyl oder C₁-C₄-Alkoxycarbonyl substituierten C₁-C₈-Alkylrest bedeutet,
- R⁷: Wasserstoff, einen durch Halogen, Hydroxy, Cyano, Nitro, C₁-C₄-Alkoxy, Carboxyl, Aminocarbonyl, C₁-C₄-Alkylcarbonyl oder C₁-C₄-Alkoxycarbonyl substituierten C₁-C₈-Alkylrest oder einen gegebenenfalls durch Halogen, C₁-C₄-Alkyl oder C₁-C₄-Alkoxy substituierten Phenylrest bedeutet,
- R⁸: Wasserstoff, einen durch Halogen, Hydroxy, Cyano, Nitro, C₁-C₄-Alkoxy, Carboxyl, Aminocarbonyl, C₁-C₄-Alkylcarbonyl oder C₁-C₄-Alkoxycarbonyl substituierten C₁-C₈-Alkylrest oder einen gegebenenfalls durch Halogen, C₁-C₄-Alkyl oder C₁-C₄-Alkoxy substituierten Benzyl- oder Phenethylrest bedeutet und
- n und m: unabhängig voneinander 1 oder 2 bedeuten,
mit der Bedingung, daß R² nicht für Methyl steht, wenn R¹ Phenyl oder 4-Methoxyphenyl bedeutet.

Besonders bevorzugt sind Farbstoffe der Formel (I), bei denen
- R¹: Phenyl, das entweder durch einen der Reste der Reihe Methyl, Ethyl, Isopropyl, Cyclohexyl, Cyclohexenyl, Hydroxy, Methoxy, Ethoxy, Phenoxy, Cyano, Nitro, Fluor, Chlor, Brom, Trifluormethyl, Phenacylamino, Acetylamino, N-Methyl-acetylamino, Dimethylamino, Diethylamino, Phenylamino, Acetyl, Methylsulfonyl, Ethylsulfonyl, Phenylsulfonyl, Phenacyl, Methoxycarbonyl, Ethoxycarbonyl, Butoxycarbonyl in 2-, 3- oder 4-Stellung substituiert ist, oder das durch zwei gleiche oder verschiedene Reste der Reihe Methyl, Ethyl, Isopropyl, Methoxy, Ethoxy, Phenoxy, Cyano, Nitro, Fluor, Chlor, Brom, Trifluormethyl in 2,3-, 2,4-, 3,4-, 3,5-, 2,5- oder 2,6-Stellung substituiert ist oder das durch drei gleiche oder verschiedene Reste der Reihe Methyl, Ethyl, Chlor, Methoxy in 2,4,5-, 2,4,6- oder 2,3,5-Stellung substituiert ist, bedeutet oder über benachbarte Positionen zu einem Benzo-1,4-dioxanyl-, Benzo-1,3-dioxanyl, Dibenzodioxanyl-, Dibenzofuranyl-, Tetrafluoro-benzo-1,4-dioxanyl-Ring geschlossen ist,
- R²: Methyl, Ethyl, Propyl, Butyl, Hydroxyethyl, Hydroxypropyl, Chlorethyl, Cyanomethyl, Cyanoethyl, Cyanopropyl, Methoxyethyl, Ethoxyethyl, Methoxypropyl, Aminocarbonylethyl, Dimethylaminocarbonylethyl, Methoxycarbonylethyl, Ethoxycarbonylethyl, Carboxyethyl, Benzyl, Phenethyl, 4-Methylbenzyl, 4-Chlorbenzyl, 4-Methoxybenzyl, 4-Cyanobenzyl, 4-Nitrobenzyl, 4-Methoxycarbonylbenzyl oder 4-Acerylbenzyl bedeutet,
- R³: in 2- und/oder 5-Stellung zur Azobrücke Wasserstoff, Methyl, Ethyl, Fluor, Chlor, Nitro, Cyano, Hydroxy, Methoxy, Ethoxy, Butoxy, Trifluormethyl, Methoxycarbonyl, Ethoxycarbonyl, Butoxycarbonyl oder Carboxyl bedeutet,
- R⁴ und R⁵: unabhängig voneinander Methyl, Ethyl, Propyl, Butyl, Hydroxyethyl, Hydroxypropyl, Chlorethyl, Cyanomethyl, Cyanoethyl, Cyanopropyl, Methoxyethyl, Ethoxyethyl, Methoxypropyl, Ethoxypropyl, Aminocarbonylethyl, Dimethylaminocarbonylethyl, Diethylaminocarbonylethyl, Methoxycarbonylethyl, Ethoxycarbonylethyl, Carbonylethyl, Benzyl, Phenethyl, 4-Methylbenzyl, 4-Chlorbenzyl, 4-Methoxybenzyl, 4-Cyanobenzyl, 4-Nitrobenzyl oder Phenyl, das entweder durch einen der Reste der Reihe Methyl, Ethyl, Isopropyl, Cyclohexyl, Cyclohexenyl, Hydroxy, Methoxy, Ethoxy, Phenoxy, Cyano, Nitro, Fluor, Chlor, Brom, Trifluormethyl, Phenacylamino, Acetylamino, N-Methyl-acetylamino, Dimethylamino, Diethylamino, Phenylamino, Acetyl, Methylsulfonyl, Ethylsulfonyl, Phenylsulfonyl, Phenacyl, Methoxycarbonyl, Ethoxycarbonyl, Butoxycarbonyl in 2-, 3- oder 4-Stellung substituiert ist, oder das durch zwei gleiche oder verschiedene Reste der Reihe Methyl, Ethyl, Isopropyl, Methoxy, Ethoxy, Phenoxy, Cyano, Nitro, Fluor, Chlor, Brom, Trifluormethyl, in 2,3-, 2,4-, 3,4-, 3,5-, 2,5- oder 2,6-Stellung substituiert ist, oder das durch drei gleiche oder verschiedene Reste der Reihe Methyl, Ethyl, Chlor, Methoxy in 2,4,5-, 2,4,6- oder 2,3,5-Stellung substituiert ist, oder über benachbarte Positionen zu einem Benzo-1,4-dioxanyl-, Benzo-1,3-dioxanyl-, Dibenzodioxanyl-, Dibenzofuranyl-, Tetrafluoro-benzo-1,4-dioxanyl-Ring geschlossen ist, bedeuten,
- R⁶: Wasserstoff, Methyl, Ethyl, Propyl, Butyl, Hydroxyethyl, Hydroxypropyl, Chlorethyl, Cyanomethyl, Cyanoethyl, Cyanopropyl, Methoxyethyl, Ethoxyethyl, Methoxypropyl, Ethoxypropyl, Aminocarbonylethyl, Dimethylaminocarbonylethyl, Diethylaminocarbonylethyl, Methoxycarbonylethyl, Ethoxycarbonylethyl, Carbonylethyl, Benzyl, Phenethyl, 4-Methylbenzyl, 4-Chlorbenzyl, 4-Methoxybenzyl, 4-Cyanobenzyl oder Nitrobenzyl bedeutet oder
- R⁴ mit R³: in o-Stellung des Benzolrings unter Einschluß des Stickstoffatoms verbunden ist und so insgesamt einen Dihydroindol-, 2-Methyldihydroindol-, 2,4,4-Trimethyl-tetrahydrochinolin, Tetrahydrochinolin-, Tetrahydrochinoxalin- oder Tetrahydro-1,4-benzoxazinring bilden oder
- R⁴ und R⁵: zusammen mit dem dazwischenliegenden Stickstoffatom zu einem Pyrrolidin-, Piperidin-, Morpholin- oder Piperazin-Ring verbunden sind,
- R⁶: Wasserstoff, in 5- oder 6-Stellung Methyl, Fluor, Chlor, Brom, Cyan, Methoxycarbonyl, Methoxy bedeutet,
- R⁷: Wasserstoff, Methyl, Ethyl, Cyanomethyl, Cyanoethyl, Benzyl, 4-Methoxybenzyl, 4-Cyanobenzyl, 4-Nitrobenzyl, Phenyl, 4-Methylphenyl, 4-Ethylphenyl, 4-Cyanophenyl, 4-Nitrophenyl, 4-Methoxyphenyl bedeutet,
- R⁸: Wasserstoff, Methyl, Ethyl, Cyanomethyl, Cyanoethyl, Benzyl, 4-Methoxybenzyl, 4-Cyanobenzyl, 4-Nitrobenzyl bedeutet,
- X⁻: ein farbloses Anion bedeutet und
- n und m: unabhängig voneinander 1 oder 2 bedeuten
mit der Bedingung, daß R² nicht für Methyl steht, wenn R¹ Phenyl oder 4-Methoxyphenyl bedeutet.

Ganz besonders bevorzugt sind kationische 1,3,4-Thiadiazolfarbstoffe der Formel (I), in der
- R¹: 2-, 3- oder 4-Tolyl, 2,4-, 2,3-, 3,5-, 3,4- oder 2,6-Xylidyl, 2,6-Diisopropylphenyl, 2,4,6-Trimethylphenyl, 2-, 3- oder 4-Anisidyl, 2-, 3-, 4-Phenetidiyl, 4-Phenoxyphenyl, 2,4- oder 3,4-Dimethoxyphenyl, 3,4,5-Trimethoxyphenyl, 3- oder 4-Acetaminophenyl, 4-(N-Phenyl)-acetaminophenyl, 3- oder 4-Trifluormethylphenyl, 3- oder 4-Cyanophenyl, 4-Sulfonylmethylphenyl, 3- oder 4-Acetylphenyl, 2-, 3- oder 4-Nitrophenyl, 4-Diethylaminophenyl, 4-(N-Phenyl)-aminophenyl, 4-Methoxycarbonylphenyl, 4-Ethoxycarbonylphenyl, 4-Butoxycarbonylphenyl, 2-Methoxy-5-methyl-phenyl, 3-Bromphenyl, 1,3-Benzodioxanyl, 1,4-Benzodioxanyl, 2,2,3,3-Tetrafluoro-1,4-benzodioxanyl, Dibenzofuranyl oder 1,4-Dibenzodioxanyl bedeutet,
- R²: Methyl, Hydroxypropyl, Cyanoethyl, Cyanopropyl, Aminocarbonylethyl, Dimethylaminocarbonylethyl, t-Butylaminocarbonylethyl, Carboxylethyl, Carboxymethyl, Ethoxycarbonylethyl oder Methoxycarbonylethyl bedeutet,
- R³: Wasserstoff, Methyl, Methoxy, Butoxycarbonyl, Butoxy, Cyano oder Nitro in meta-Stellung zur Azogruppe und Wasserstoff oder Methyl in ortho-Stellung zur Azogruppe bedeutet,
- R⁴: Wasserstoff, Methyl, Ethyl, Propyl, Butyl, Cyanethyl, Hydroxyethyl, Carbonyloxymethylethyl, Thiocyanatoethyl, Sulfonylmethylethyl oder Oxycarbonylmethylethyl bedeutet,
- R⁵: Methyl, Ethyl, Propyl, Butyl, Cyanethyl, Phenyl, 2-, 3- oder 4-Tolyl, 2,4-, 2,3-, 3,5-, 3,4- oder 2,6-Xylidyl, 2,6-Diisopropylphenyl, 2-, 3- oder 4-Anisidyl, 2-, 3- oder 4-Phenetidyl, 4-Phenoxyphenyl, 2,4- oder 3,4-Dimethoxyphenyl-, 3,4,5-Trimethoxyphenyl-, 3- oder 4-Acetaminophenyl, 4-(N-Phenyl)-acetaminophenyl, 3- oder 4-Trifluormethylphenyl, 3- oder 4-Cyanophenyl, 4-Sulfonylmethylphenyl, 3- oder 4-Acetylphenyl, 2-, 3- oder 4-Nitrophenyl, 4-Diethylaminophenyl, 4-(N-Phenyl)-aminophenyl, 4-Methoxycarbonylphenyl, 4-Ethoxycarbonylphenyl, 4-Butoxycarbonyphenyl, 2-Methoxy-5-methylphenyl, 3-Bromphenyl, 1,3-Benzodioxanyl, 1,4-Benzodioxanyl, 2,2,3,3-Tetrafluoro-1,4-Benzodioxanyl, Dibenzofuranyl oder 1,4-Dibenzodioxanyl bedeutet,
- R⁶: Wasserstoff,
- R⁷: Wasserstoff, Phenyl oder Methyl und
- R⁸: Wasserstoff oder Methyl bedeuten,
- n: 2 und
- m: 1 bedeuten
mit der Bedingung, daß R² nicht für Methyl steht, wenn R¹ Phenyl oder 4-Methoxyphenyl bedeutet.

Die vorliegende Erfindung betrifft weiterhin ein Verfahren zur Herstellung von kationischen 1,3,4-Thiadiazolfarbstoffen der Formel (I), das dadurch gekennzeichnet ist, daß man 2-Amino-1,3,4-thiadiazole der Formel (IV) 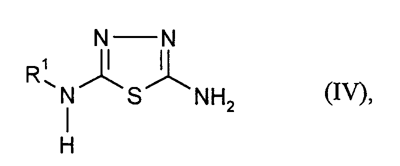
in der R¹ die oben angegebene breiteste Bedeutung hat, diazotiert und auf eine Kupplungskomponente K kuppelt und dann mit Verbindungen der Formel (VII)

(R²)X (VII)

in der
- R² und X: die oben angegebene breiteste Bedeutung haben,
quaterniert.

Bei der Kupplungskomponente K handelt es sich vorzugsweise um eine Verbindung der Formeln (V) oder (VI) 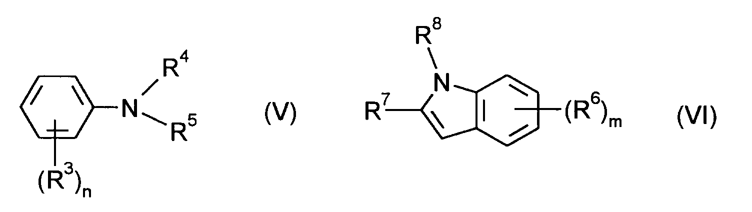
in denen
- R³, R⁴, R⁵, R⁶, R⁷, R⁸, m und n: die oben angegebene breiteste Bedeutung haben.

Die Diazotierung und Kupplung können in an sich bekannter Weise durchgeführt werden, beispielsweise mit Nitrosylschwefelsäure in 80 bis 90 gew.-%iger Phosphorsäure oder in Gemischen solcher Phosphorsäuren mit Essigsäure, Propionsäure und/oder Schwefelsäure. Die erwähnte Kupplung kann ebenfalls auf an sich bekannte Weise durchgeführt werden, beispielsweise in einem sauren Medium, das wäßrig oder wäßrig-organisch sein kann.

Die Diazotierung und Kupplung können auch nach anderen an sich bekannten Verfahren simultan durchgeführt werden, beispielsweise indem man Verbindungen der Formel (IV) und Verbindungen K gemeinsam in einem sauren Medium mit beispielsweise Natriumnitrit umsetzt. Als saure Medien sind z.B. wäßrige Mineralsäuren oder organische Säuren oder Mischungen davon geeignet, wobei als Mineralsäuren z.B. Salzsäure, Schwefelsäure und Phosphorsäure und als organische Säuren z.B. Ameisensäure, Essigsäure und Propionsäure in Frage kommen. Auch unter Druck verflüssigtes Kohlendioxid kann als saures Medium dienen. Als quaternierende Mittel kommen z.B. in Betracht Alkylhalogenide, Halogenacetamide, β-Halogenpropionitrile, Halogenhydrine, Alkylenoxide, Alkylester der Schwefelsäure, Alkylester organischer Sulfonsäuren, Nitrile, Amide und Ester von α,β-ungesättigten Carbonsäuren, Alkoxyalkylhalogenide und Vinylpyridine. Als Beispiele seien genannt: Methylchlorid, Methylbromid, Methyliodid, Benzylchlorid, Benzylbromid, Chloracetamid, β-Chlorpropionitril, Ethylenchlorhydrin, Dimethylsulfat, Diethylsulfat, Benzolsulfonsäuremethylester, Benzolsulfonsäureethylester, Toluolsulfonsäurepropylester, Allylchlorid, Allylbromid, Ethylenoxid, Propylenoxid, Acrylnitril, Acrylsäure, Acrylamid, Acrylsäuremethylester, 2- und 4-Vinylpyridin, Sulfolen, Epichlorhydrin, Styroloxid, Methylphosphonsäuredimethylester und Allylphosphorsäureester.

Die erwähnte Quaternierung kann z.B. in einem indifferenten organischen Lösungsmittel, in Wasser oder in Mischung davon erfolgen, wobei gegebenenfalls säurebindende Mittel, wie Magnesiumoxid, Natriumcarbonat, Natriumhydrogencarbonat, Calciumcarbonat oder Natriumacetat, zugesetzt werden können. Geeignete organische Lösungsmittel sind beispielsweise Kohlenwasserstoffe, Chlorkohlenwasserstoffe, Nitrokohlenwasserstoffe, Nitrile, Amide, Carbonsäuren, Carbonsäureanhydride, Ketone und Dialkylsulfoxide, wie Benzol, Toluol, Tetrachlorethan, Mono- und Dichlorbenzol, Nitrobenzol, Acetonitril, Propionitril, Dimethylformamid, N-Methylpyrrolidon, Essigsäure, Propionsäure, Milchsäure, Acetanhydrid, Aceton, Butanon und Dimethylsulfoxid.

Die entstehenden Farbstoffe der Formel (I) fallen entweder aus den Lösungsmitteln direkt aus und können z.B. durch Abfiltrieren isoliert werden oder man kann sie bei der Verwendung von mit Wasser mischbaren Lösungsmitteln als feste, abfiltrierbare Produkte erhalten durch Verdünnen mit Wasser und Zugabe wasserlöslicher Salze wie Natrium- oder Kaliumchlorid, gegebenenfalls in Gegenwart von Zinkchlorid.

Die erfindungsgemäßen Farbstoffe der Formel (I) eignen sich hervorragend zum Färben und Bedrucken von kationisch färbbaren Fasern, vorzugsweise von Polymerisaten und Mischpolymerisaten des Acrylnitril und Dicyanoethylens, sowie von sauer modifizierten Fasern aus Polyamid und Polyester, wobei echte Farbtöne erhalten werden. Die Farbstoffe können auch Verwendung finden zum Färben und Bedrucken von tannierten Zellulosematerialien, Papier, Seide und Leder. Sie sind weiter geeignet zur Herstellung von Schreibflüssigkeiten, Stempelflüssigkeiten und Kugelschreiberpasten. Sie lassen sich auch im Gummidruck verwenden.

Das Färben von beispielsweise Polymerisaten und Mischpolymerisaten des Acrylnitrils kann z.B. aus schwach saurer Flotte erfolgen, wobei man in das Färbebad vorzugsweise bei 40 bis 60°C eingeht und dann bei Kochtemperatur färbt. Man kann auch unter Druck bei Temperaturen über 100°C färben. Desweiteren lassen sich mit den erfindungsgemäßen Farbstoffen Spinnlösungen zum Färben polyacrylnitrilhaltiger Fasern herstellen.

Die Färbungen der erfindungsgemäßen Farbstoffe der Formel (I) auf Materialien aus Polyacrylnitril zeichnen sich durch sehr gute Licht-, Naß- und Reibechtheiten und durch eine hohe Affinität zur Faser aus.

Erfindungsgemäße Farbstoffe können einzeln, in Mischungen untereinander oder in Mischungen mit anderen Farbstoffen angewendet werden.

Die vorliegende Erfindung betrifft schließlich auch kationisch gefärbte Fasern, tannierte Zellulosematerialien, Papier, Seide, Leder, Kugelschreiberpasten, Schreibflüssigkeiten und Stempelflüssigkeiten, die dadurch gekennzeichnet sind, daß sie mindestens einen kationischen 1,3,4-Thiadiazolfarbstoff des Anspruchs 1 enthalten.

### Beispiele

### Beispiel 1

10,3 g 2-Amino-5-(p-tolylamino)-1,3,4-thiadiazol und 6,1 g Dimethylanilin wurden in 100 ml Essigsäure suspendiert. Bei 15 bis 20°C wurden in 30 Minuten 3,45 g Natriumnitrit in 8 ml Wasser zugetropft. Nach 90 Minuten Nachrühren versetzte man mit 100 ml Wasser und rührte weitere 60 Minuten. Der rote Niederschlag wurde abgesaugt, mit 10 %iger Essigsäure nachgewaschen und nach Trocknen 12,3 g Azo-Zwischenprodukt (λₘₐₓ = 510 nm) erhalten.

6,8 g dieses Azofarbstoffes suspendierte man in 70 ml Essigsäure, erwärmte auf 40 bis 45°C und gab 3,8 ml Dimethylsulfat in 5 gleichen Portionen zu. Nach 30 Minuten Nachrühren versetzte man mit 0,3 g Natriumacetat und ließ über Nacht bei 40 bis 45°C Rühren. Bei Raumtemperatur wurde mit Wasser auf 400 ml aufgefüllt und dann 150 ml gesättigte Kochsalzlösung zugegeben. Nach 60 Minuten wurde der dunkle Niederschlag abgesaugt. Nach Reinigen mit Methanol/Essigester und Ausführen in 7,5 %iger Kochsalzlösung und Trocknen wurden 3,5 g dunkelblaues Farbstoffpulver erhalten.

λₘₐₓ gemessen in Methanol/10 % Essigsäure, betrug 601 nm. Der Farbstoff färbte Polyacrylnitril in einem leicht rotstichigen Blau.

### Beispiel 2

10,9 g 2-Amino-5-(3-cyanophenyl)-1,3,4-thiadiazol löste man in 70 ml Essigsäure und 10 ml konzentrierter Schwefelsäure. Bei 10°C wurden 3,5 g Natriumnitrit in 10 ml Wasser zugetropft. Die so erhaltene Lösung der Diazoniumverbindung wurde bei 10°C in 30 Minuten zu einer Suspension von 6,2 g Dimethylanilin in 50 ml Essigsäure zugetropft. Es wurde bei Raumtemperatur über Nacht nachgerührt, mit 200 ml Wasser versetzt und der rote Niederschlag abgesaugt. Nach Ausrühren in Methanol und Trocknen erhielt man 11,0 g Azofarbstoff.

10,5 g dieses Azofarbstoffs löste man in 100 ml Essigsäure und tropfte 7,6 g Dimethylsulfat bei 40 bis 45°C zu. Nach 60 Minuten versetzte man mit 4,9 g Natriumacetat und rührte über Nacht bei 40 bis 45°C. Weitere 7,6 g Dimethylsulfat wurden nachdosiert und nach weiterem Rühren über Nacht mit 200 ml gesättigter Kochsalzlösung ausgesalzen und abgesaugt. Der Niederschlag wurde in Methanol/Essigester gereinigt und in 7,5 %iger Kochsalzlösung ausgerührt. Nach Absaugen und Trocknen verblieben 7,6 g Farbstoffpulver.

Der blaue Farbstoff mit λₘₐₓ = 599 nm (in Methanol/10 % Essigsäure gemessen) färbte Polyacrylnitril in einem leicht rotstichigen Blau.

### Beispiele 3 bis 112

Es wurde verfahren wie bei Beispiel 1 oder 2, jedoch wurden andere 2-Amino-1,3,4-thiadiazole eingesetzt und die entsprechenden Farbstoffe der Formel (I) erhalten. Die Ergebnisse sind in Tabelle 1 zusammengestellt.

In Tabelle 1 wurden folgende Abkürzungen verwendet:
Me = Methyl
Et = Ethyl
Pr = Propyl
Ph = Phenyl
Bu = Butyl

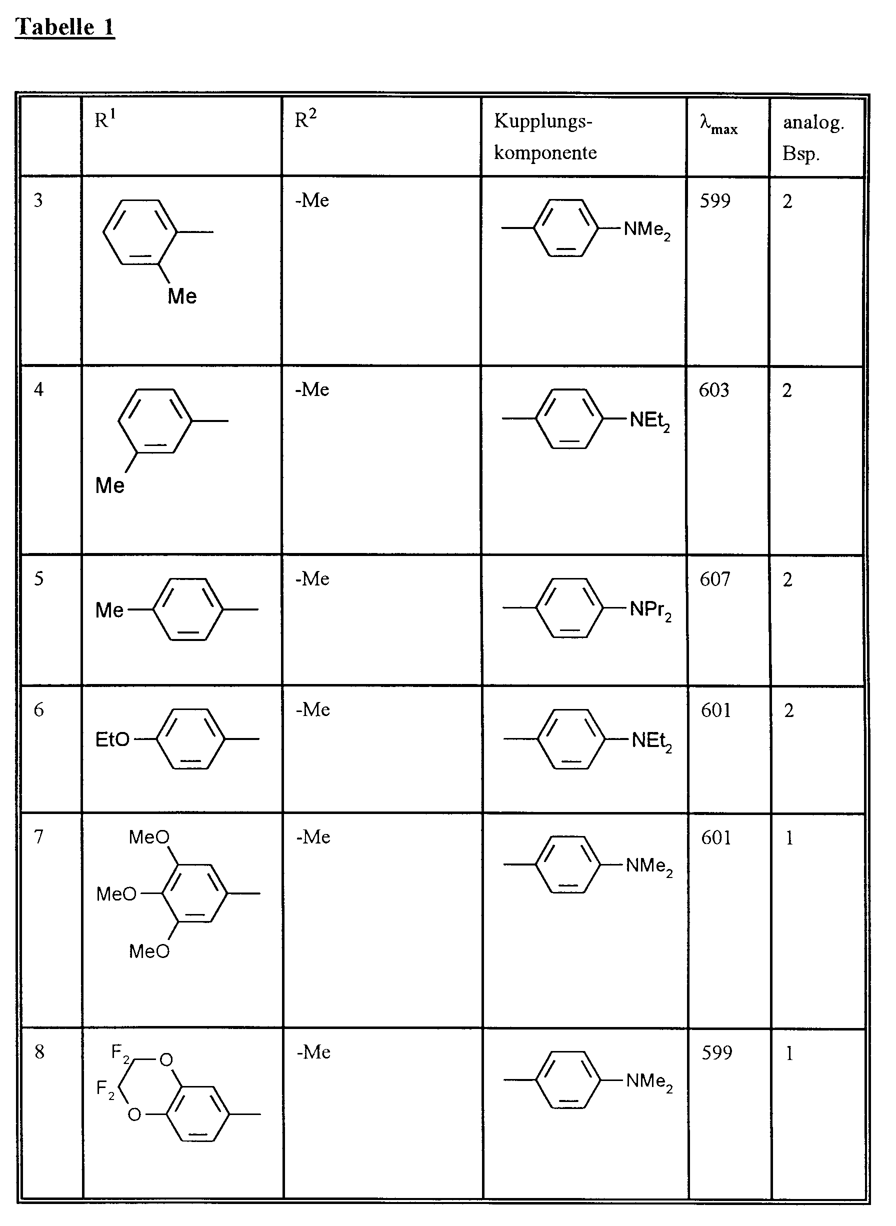

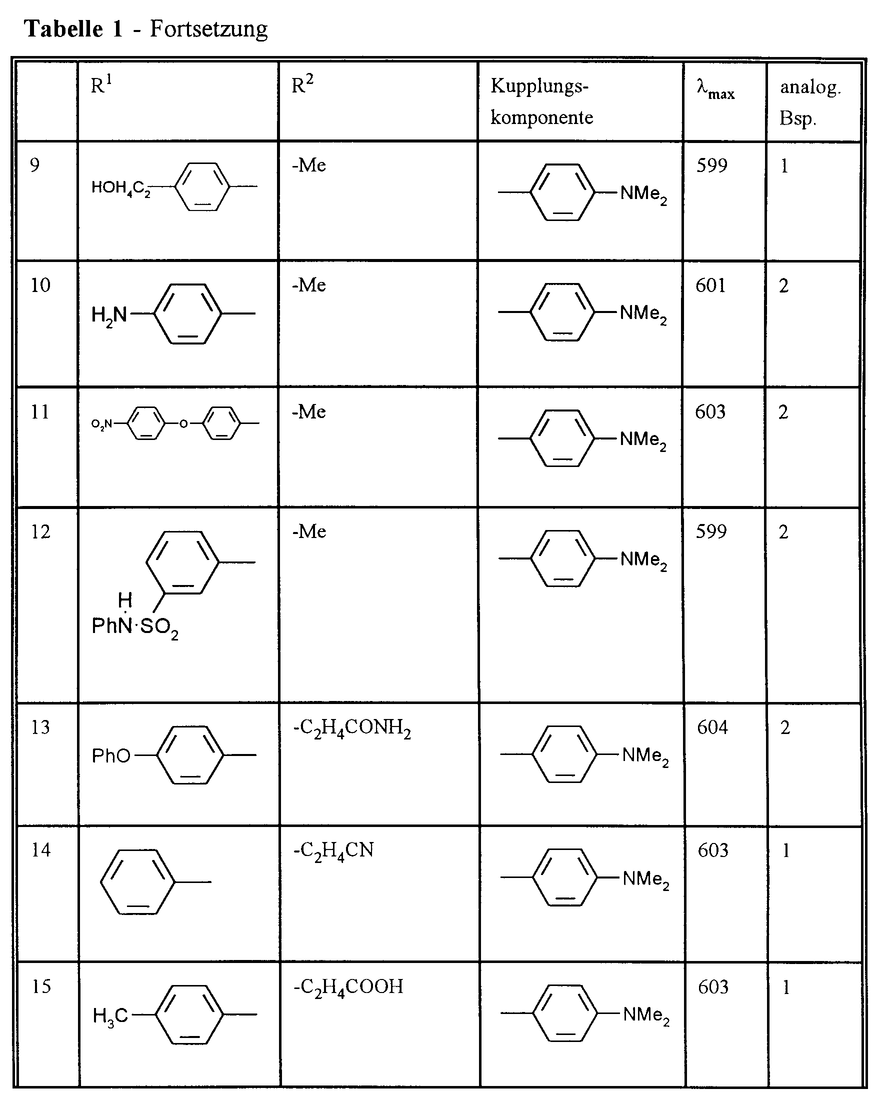

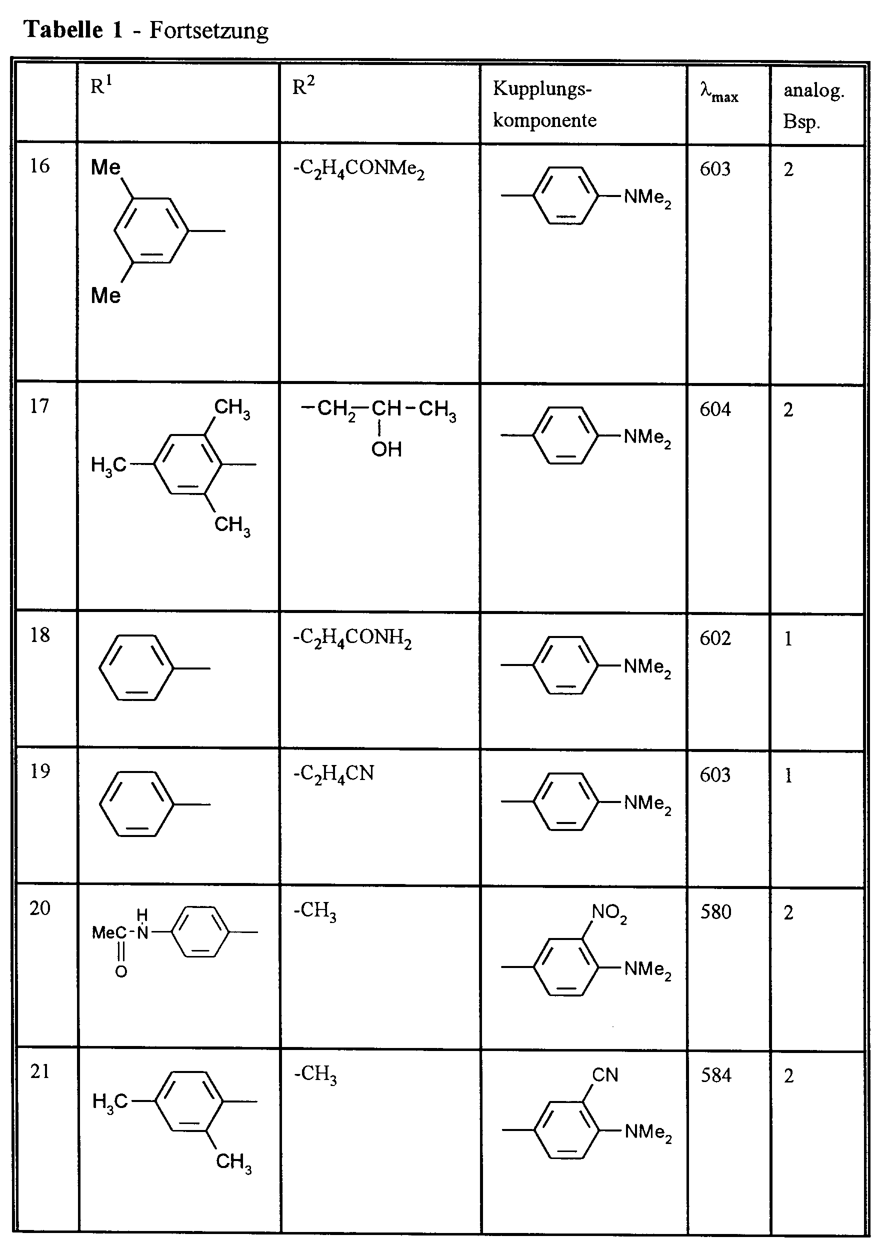

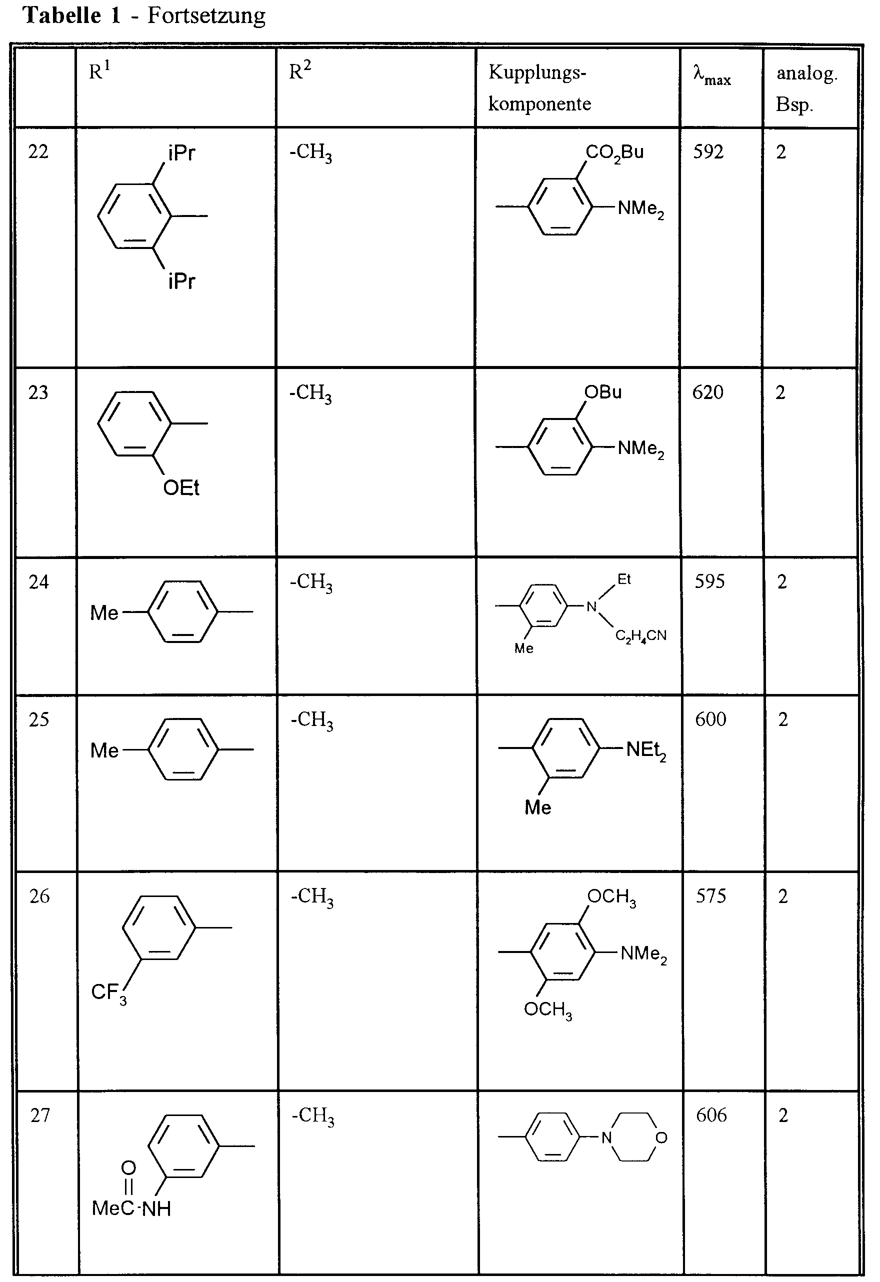

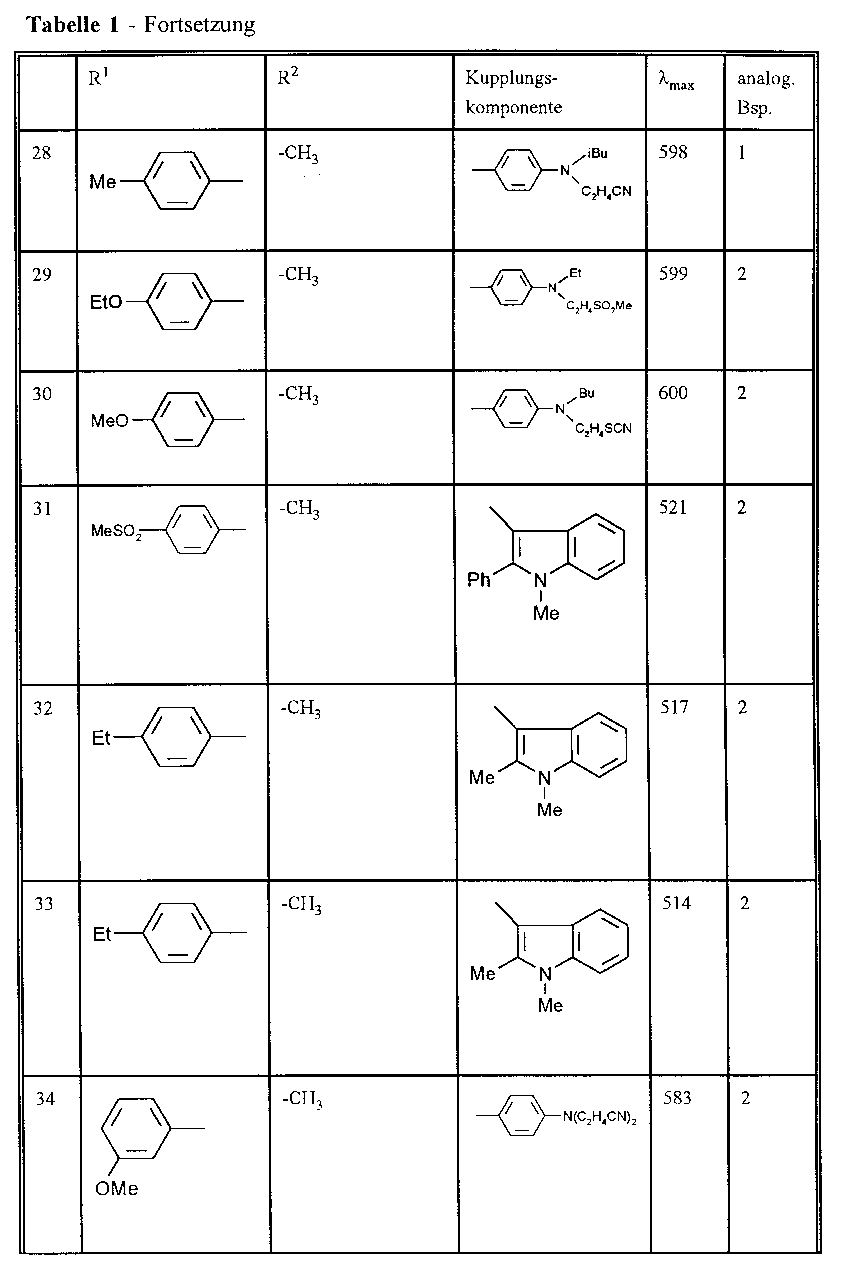

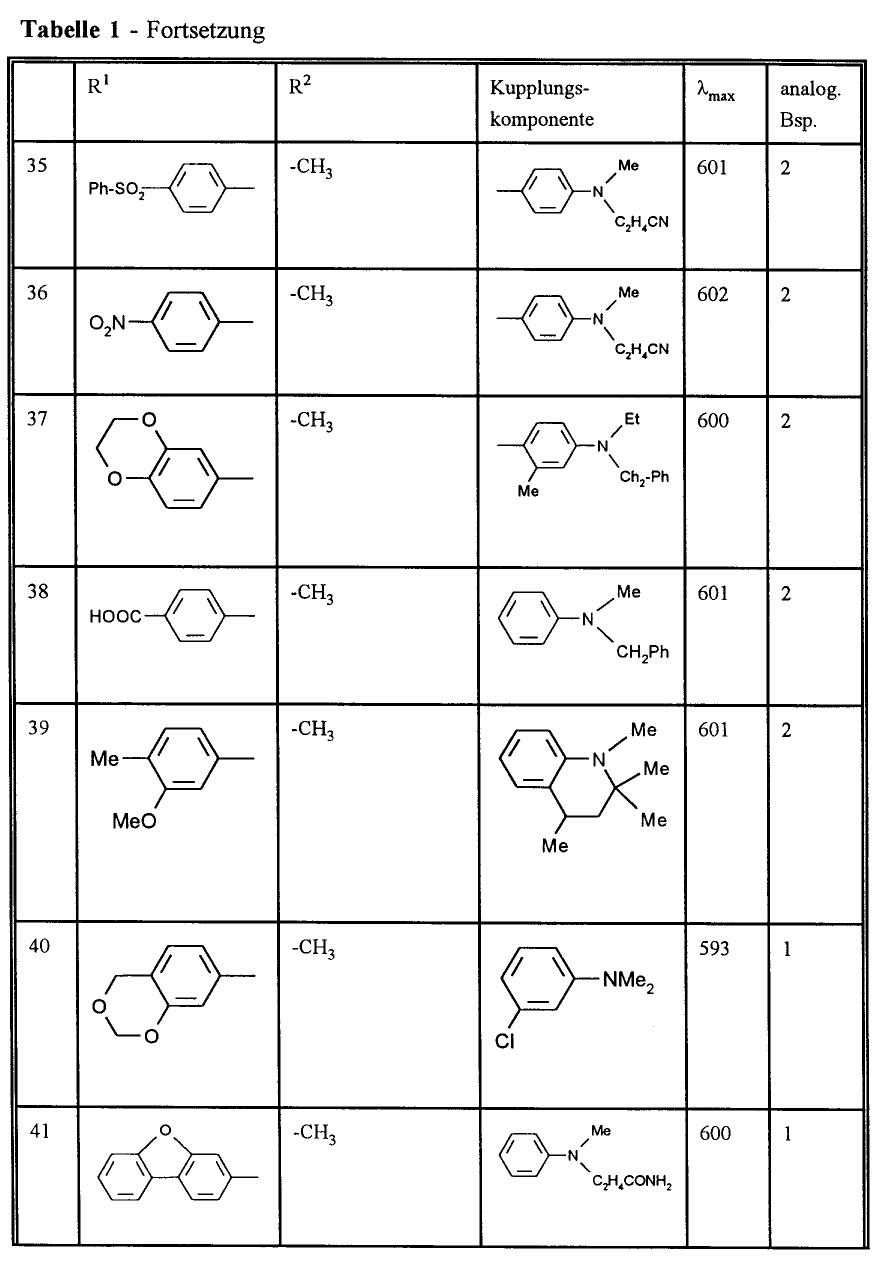

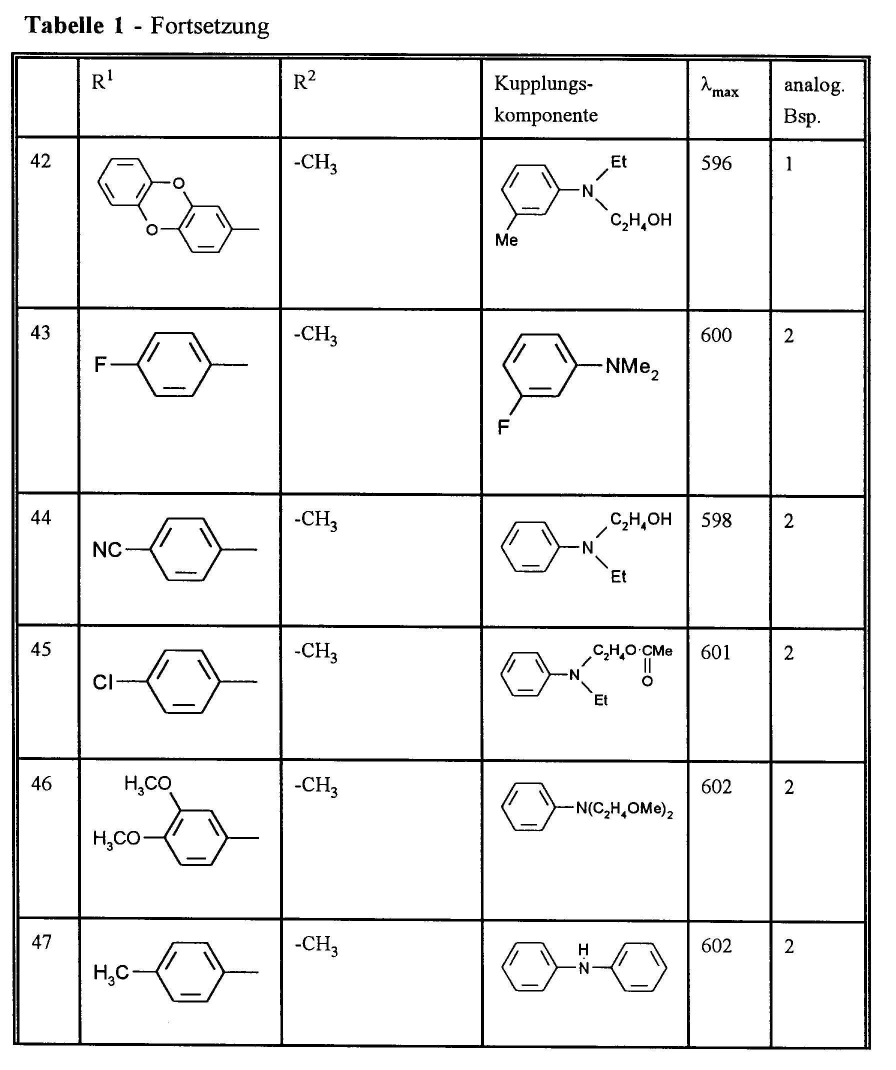

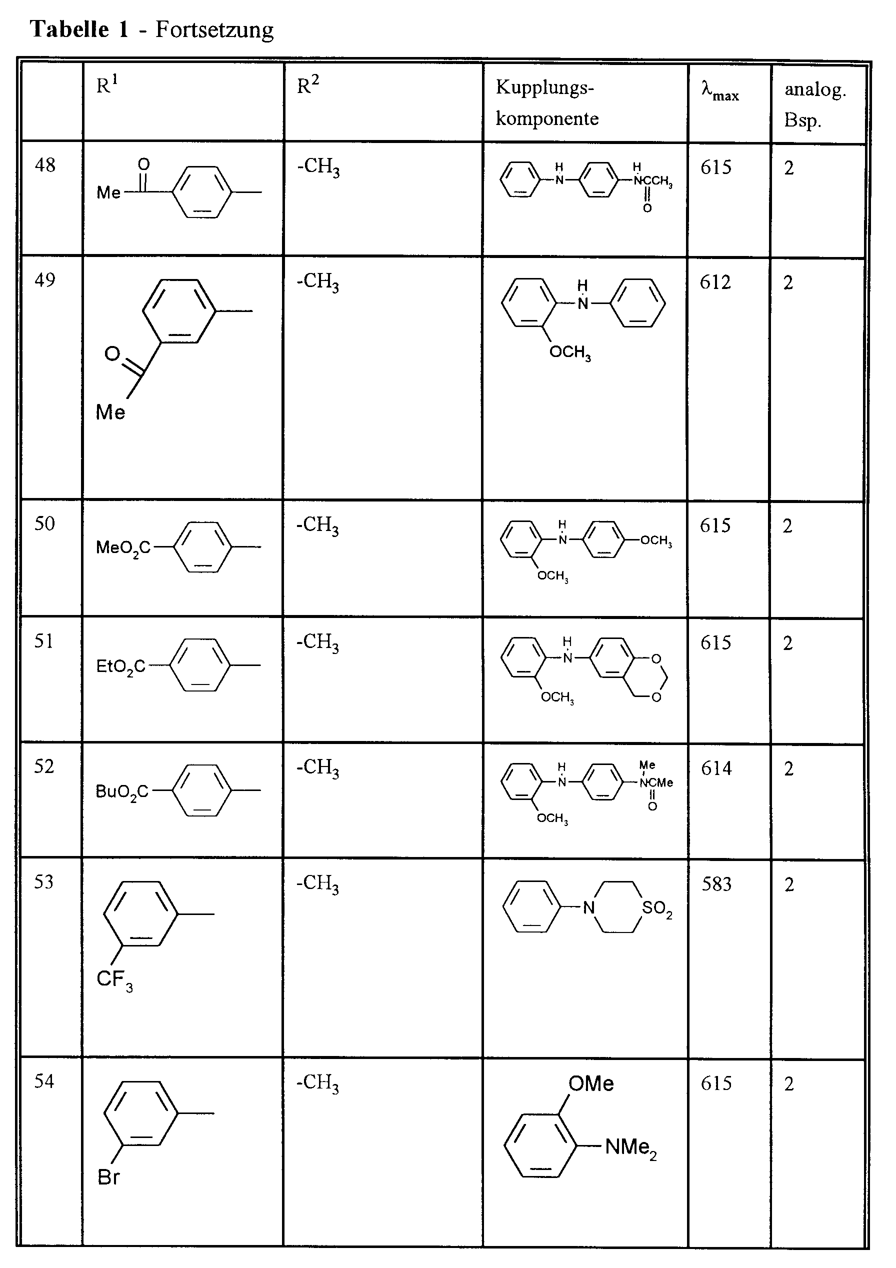

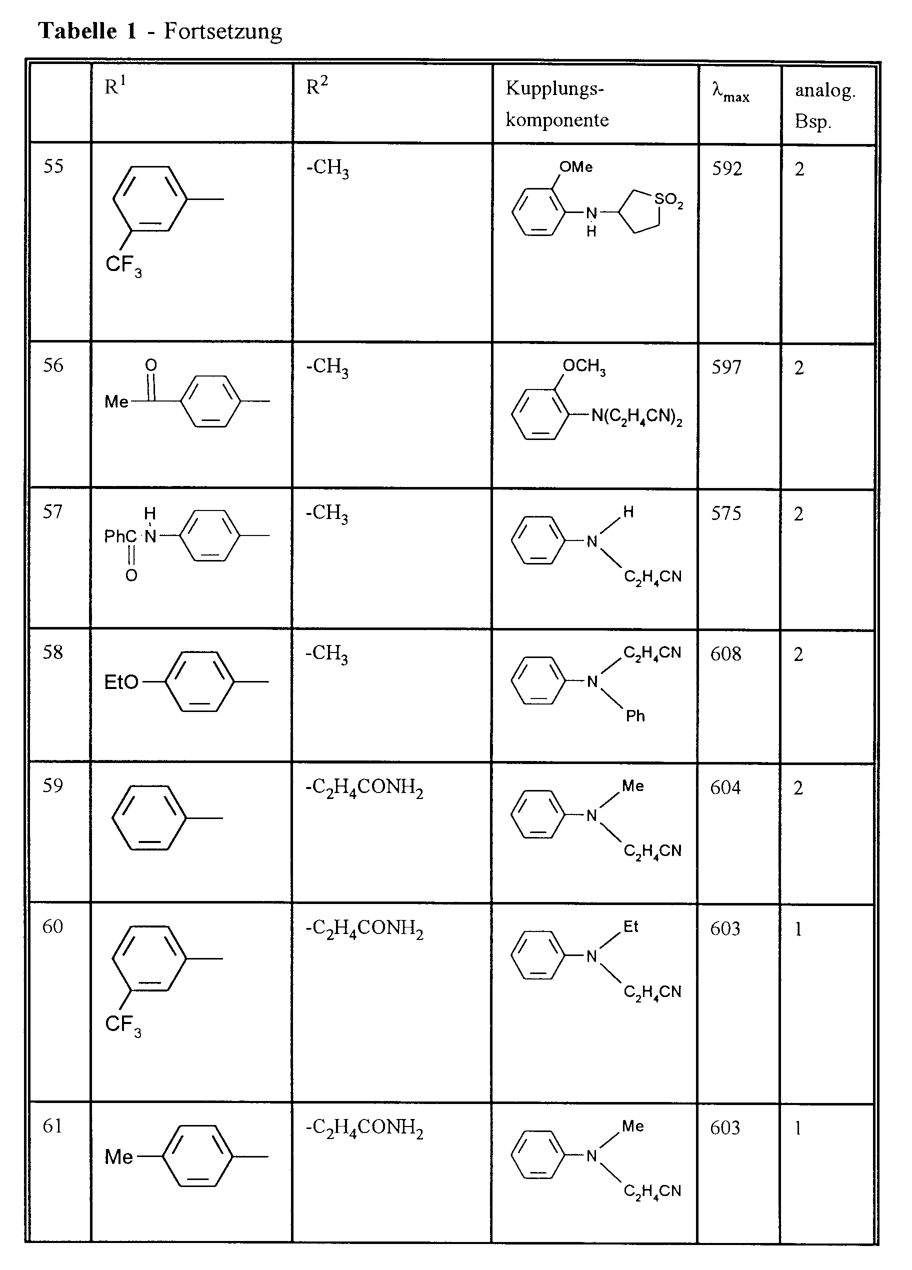

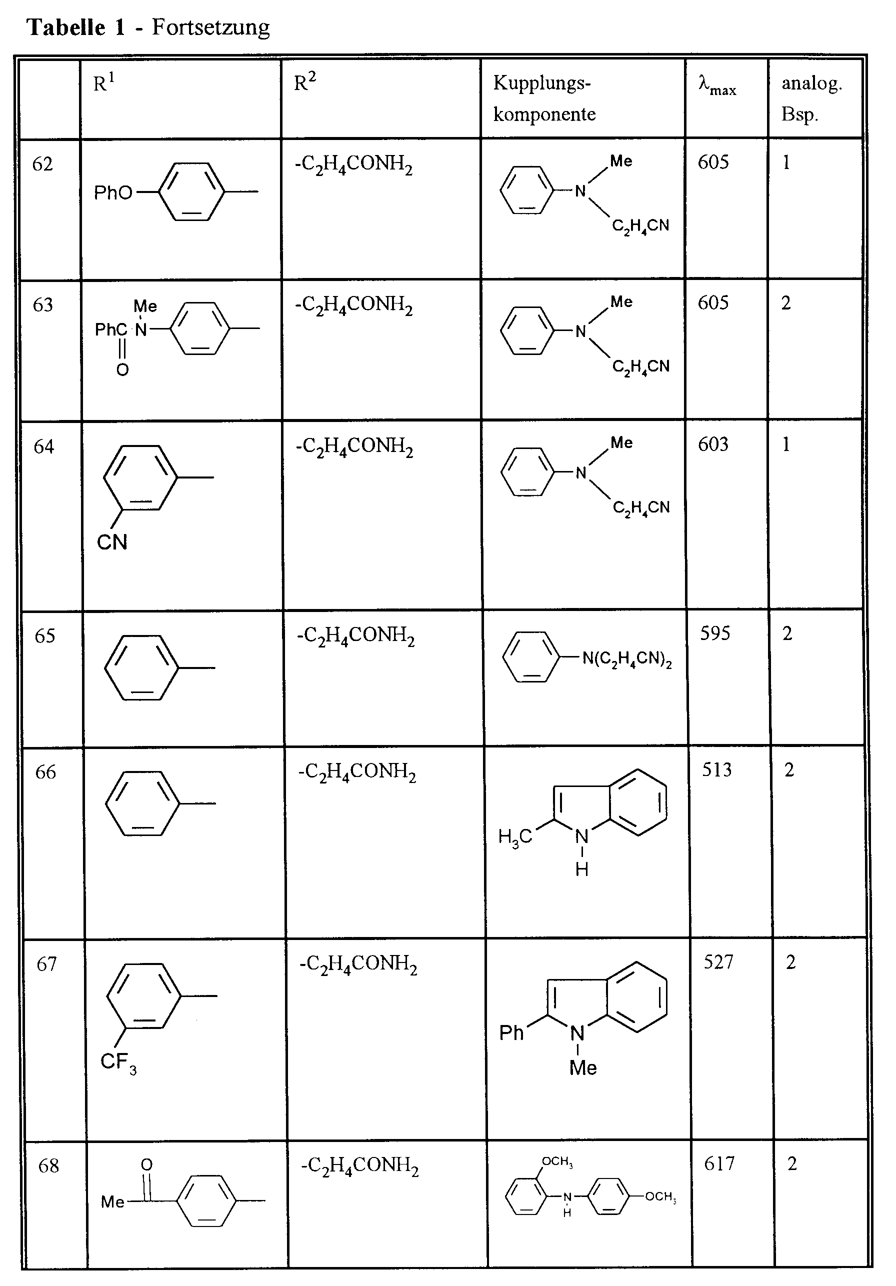

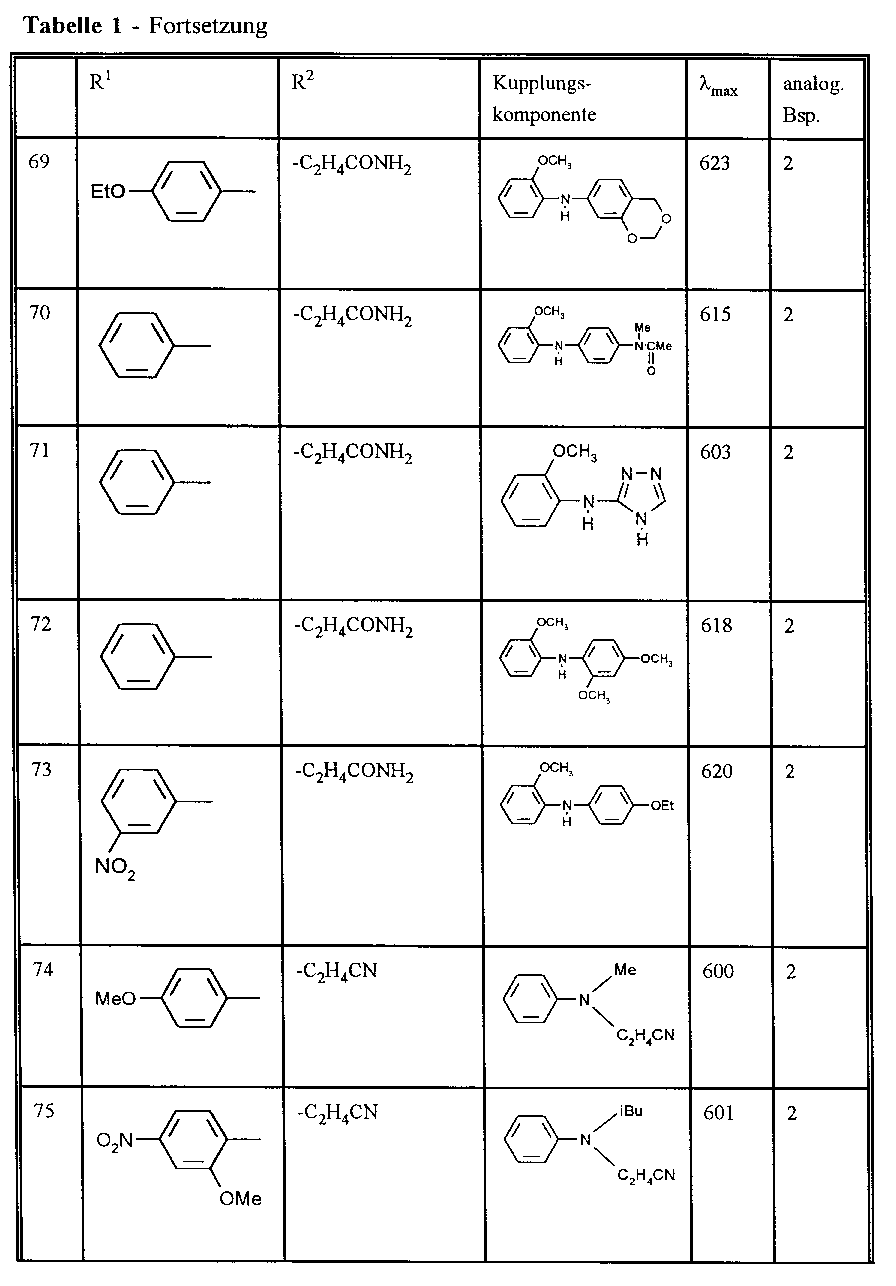

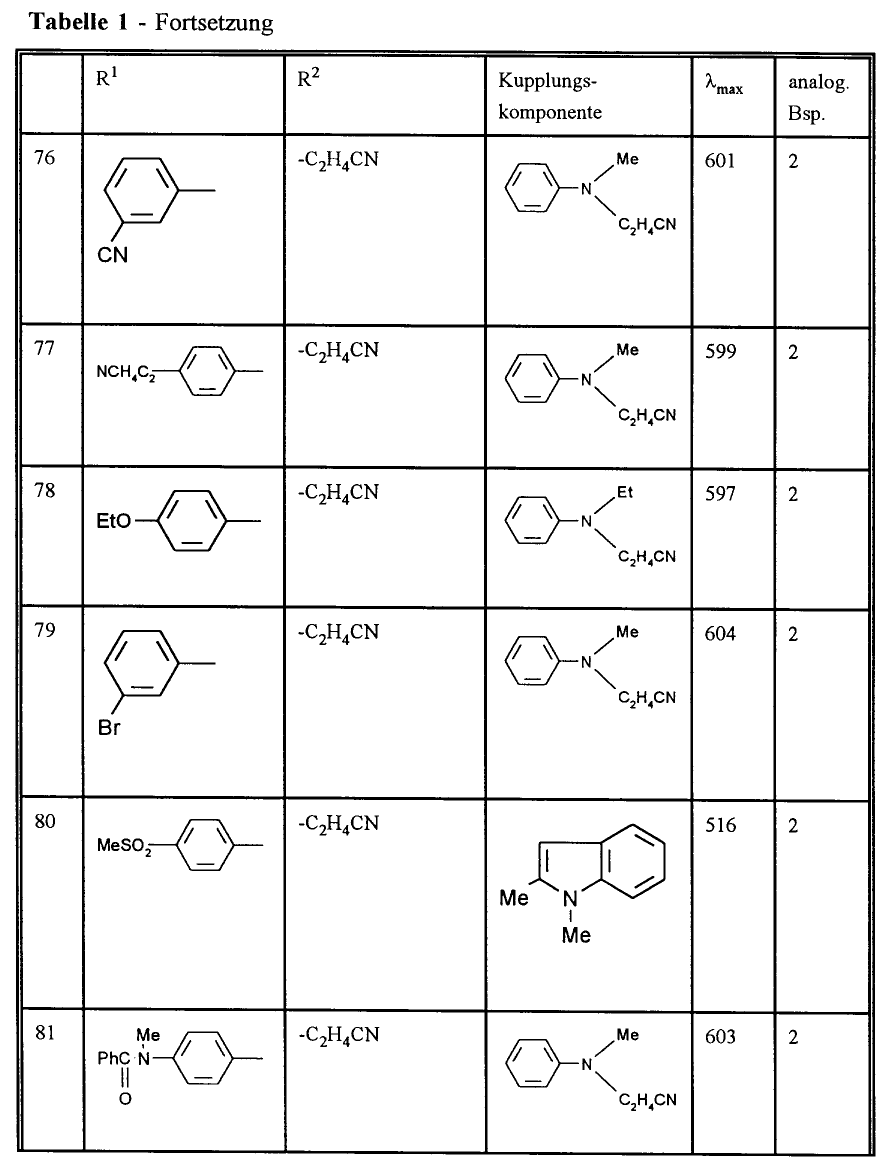

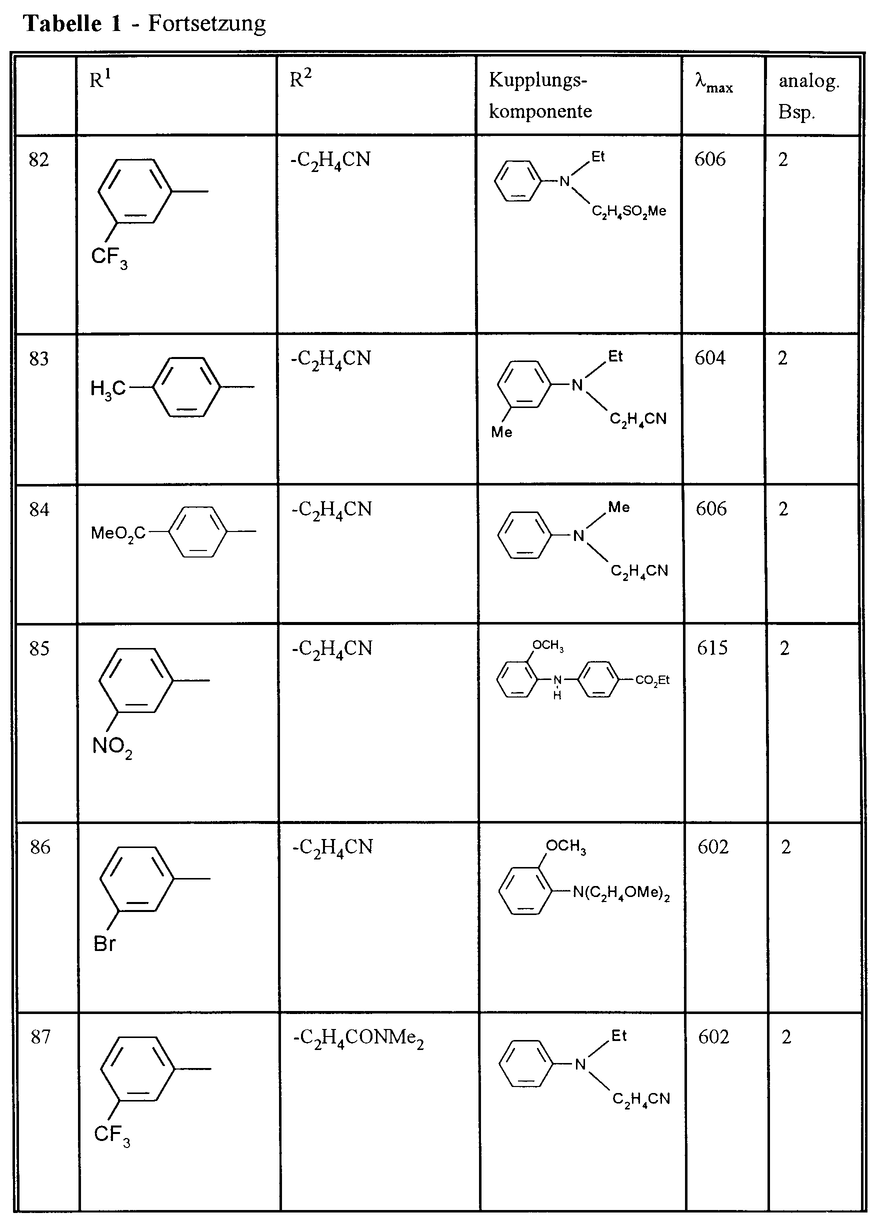

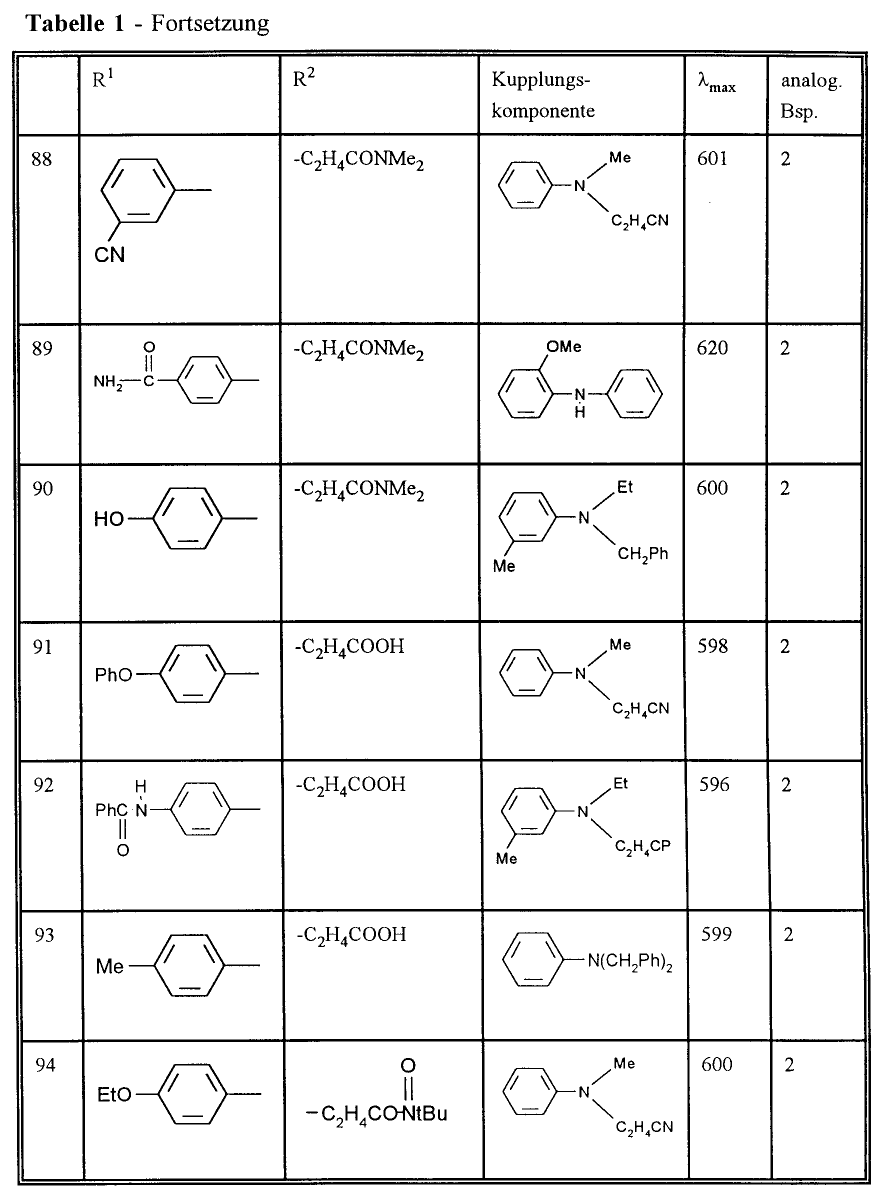

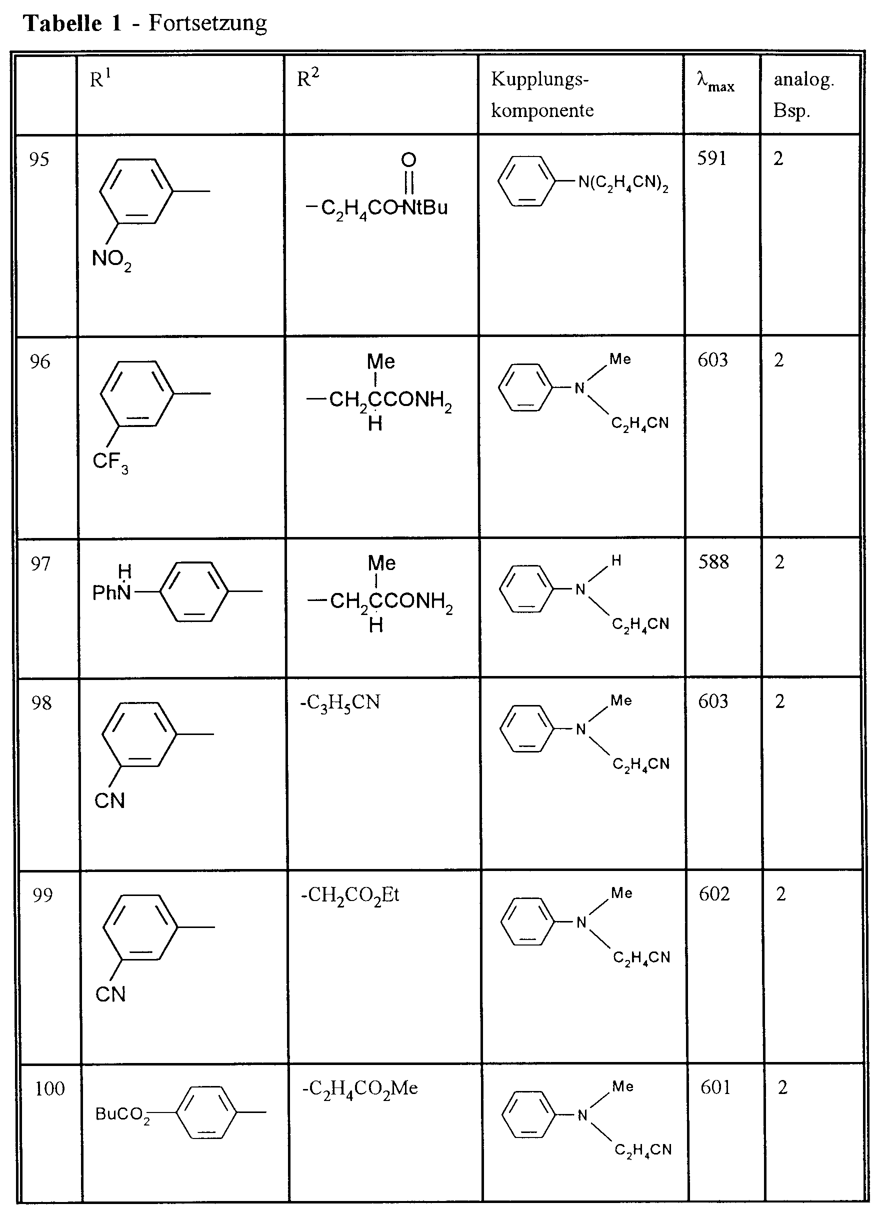

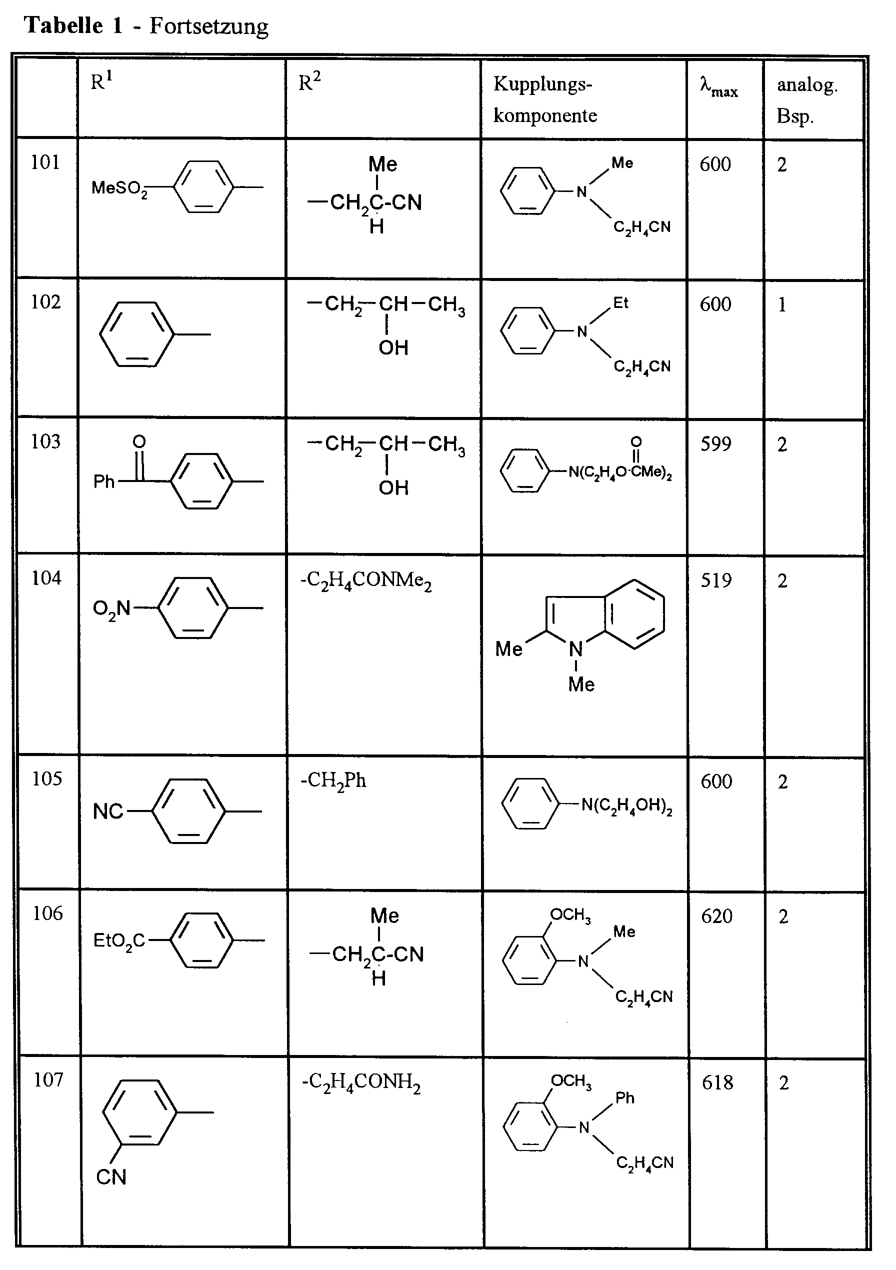

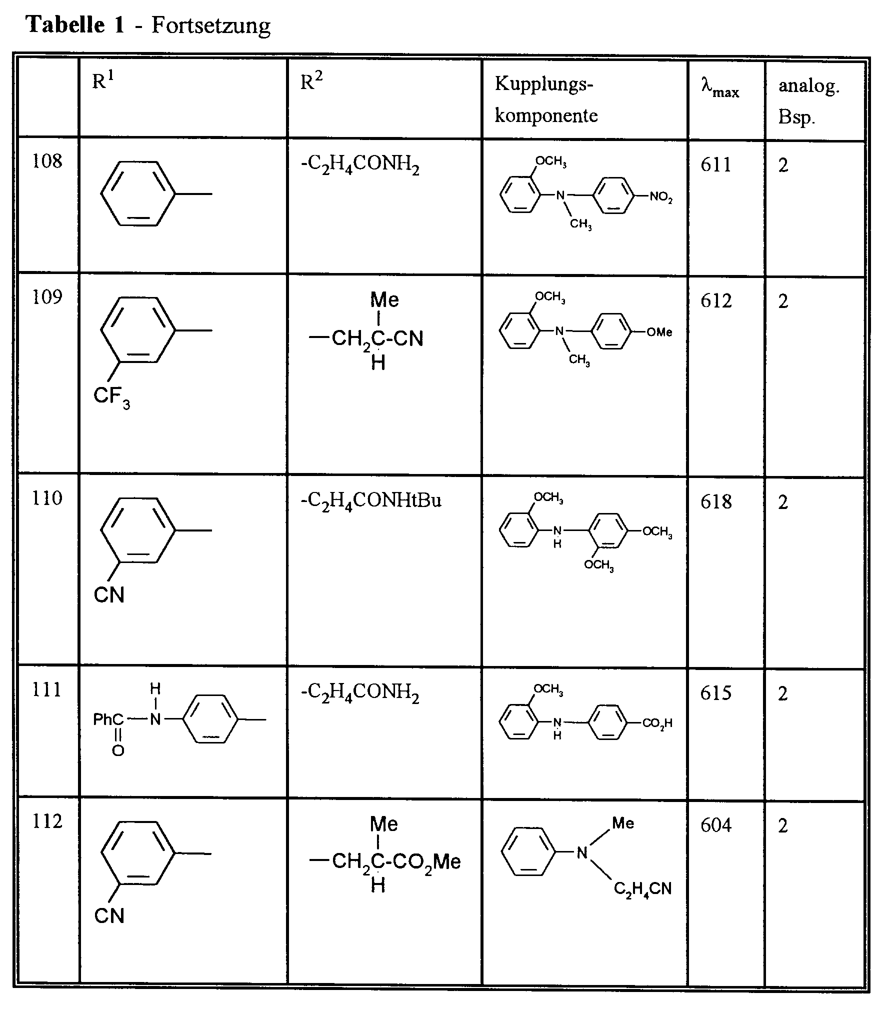

## Patentansprüche

1. Kationische 1,3,4-Thiadiazolfarbstoffe der Formel (I) 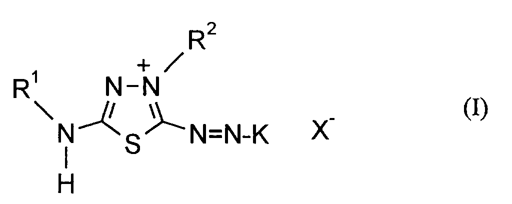 in der
R¹ C₆-C₁₀-Aryl und
R² C₁-C₁₂-Alkyl bedeuten
mit der Bedingung, daß R² nicht für Methyl steht, wenn R¹ Phenyl oder 4-Methoxyphenyl bedeutet,
K den Rest einer Kupplungskomponente und
X⁻ ein Anion bedeuten,
wobei alle vorhandenen Alkyl- und Aryl-Reste gegebenenfalls mit nichtionogenen Substituenten und/oder Carboxylgruppen substituiert sein können.

2. Farbstoffe nach Anspruch 1, dadurch gekennzeichnet, daß in Formel (I)
R¹ Phenyl oder Naphthyl bedeutet, die gegebenenfalls jeweils mit maximal 3 Substituenten aus der Gruppe C₁-C₁₂-Alkyl, C₁-C₁₂-Alkenyl, C₁-C₁₂-Alkinyl, Benzyl, Phenethyl, Phenyl, Fluor, Chlor, Brom, Cyano, Nitro, Hydroxy, C₁-C₁₂-Alkyloxy, C₆-C₁₀-Aryloxy, Amino, Mono-C₁-C₁₂-alkylamino, Di-C₁-C₁₂-alkylamino, C₆-C₁₀-Arylamino, C₁-C₁₂-Acylamino, C₁-C₁₂-Acyl, C₁-C₁₂-Acyloxy, C₁-C₁₂-Alkylsulfonyl, C₆-C₁₀-Arylsulfonyl, Aminosulfonyl, Mono- und Di-C₁-C₁₂-alkylaminosulfonyl und Mono- und Di-C₆-C₁₀-Arylaminosulfonyl substituiert sein können, wobei zwei dieser Substituenten in benachbarten Positionen auch einen Ring bilden können, und
K einen Rest der Formel (II) oder (III) 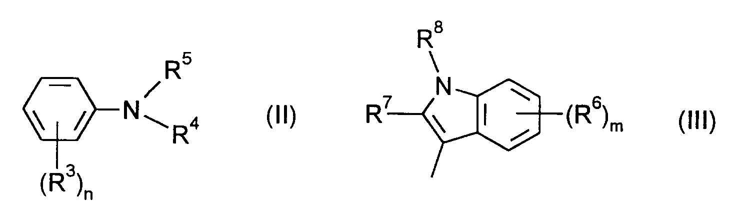 darstellt, in denen
R³ Wasserstoff, Fluor, Chlor, Brom, Cyano, Nitro, Hydroxy, C₁-C₁₂-Alkyl, C₁-C₁₂-Alkoxy oder C₁-C₁₂-Alkoxycarbonyl und
R⁴ und R⁵ unabhängig voneinander jeweils Wasserstoff, C₁-C₁₂-Alkyl, C₆-C₁₀-Aryl, Benzyl, Phenethyl, C₁-C₁₂-Alkenyl, Cyclo-C₄-C₇-alkyl, einen gegebenenfalls über eine Methylen- oder Ethylengruppe gebundenen Heterocyclus mit bis zu 2 Ringen und bis zu 3 Heteroatomen aus der Gruppe O, N und S oder
R⁴ und R⁵ gemeinsam mit dem dazwischenliegenden Sfickstoffatom einen Heterocyclus mit bis zu 2 Ringen und bis zu 4 Heteroatomen aus der Gruppe O, N und S und mindestens einem N-Atom bedeuten oder
R³ und R⁴ und/oder R³ und R⁵ gemeinsam eine 2- oder 3-C-Atome enthaltende Brücke bedeuten können, die gegebenenfalls ein Sauerstoff-, Stickstoff- oder Schwefelatom enthält und gegebenenfalls mit 1 bis 3 Methyl- oder Ethylgruppen substituiert ist,
R⁶ Wasserstoff, C₁-C₁₂-Alkyl, C₁-C₁₂-Alkoxy, Cyan, Halogen oder Nitro,
R⁷ und R⁸ unabhängig voneinander Wasserstoff, C₁-C₁₂-Alkyl, C₆-C₁₀-Aryl, Benzyl oder Phenethyl und
n und m unabhängig voneinander 1 oder 2 bedeuten
wobei Alkyl-, Aryl-, Aralkyl-, Alkenyl-, Cycloalkyl- und heterocyclische Reste gegebenenfalls mit nichtionogenen Substituenten oder Carboxylgruppen substituiert sein können,
mit der Bedingung, daß R² nicht für Methyl steht, wenn R¹ Phenyl oder 4-Methoxyphenyl bedeutet.

3. Farbstoffe nach Ansprüchen 1 und 2, dadurch gekennzeichnet, daß in Formel (I)
R¹ einen Phenylrest bedeutet, der mit bis zu 3 Substituenten aus der Gruppe Cyano, Hydroxy, Halogen, Nitro, Amino, gegebenenfalls durch Hydroxy, Halogen, Cyano, Nitro, C₁-C₄-Alkoxy, Aminocarbonyl, C₁-C₄-Alkylcarbonyl, C₁-C₄-Acylamino oder C₁-C₄-Alkoxycarbonyl substituiertes C₁-C₈-Alkyl, Allyl, Ethinyl, gegebenenfalls durch Hydroxy, Halogen, Cyano, Nitro, C₁-C₄-Alkyl, C₁-C₄-Alkoxy, C₁-C₄-Acylamino, C₁-C₄-Alkoxycarbonyl, C₁-C₄-Alkylcarbonyl oder Aminocarbonyl substituiertes Benzyl, Phenethyl oder Phenyl, gegebenenfalls durch Hydroxy, Halogen, Cyano, Nitro, C₁-C₄-Alkoxy, C₁-C₄-Alkylcarbonyl, C₁-C₄-Acylamino, Aminocarbonyl oder C₁-C₄-Alkoxycarbonyl substituiertes C₁-C₈-Alkoxy oder C₆-C₁₀-Aryloxy, gegebenenfalls durch Hydroxy, Halogen, Cyano, Nitro, C₁-C₄-Alkoxy, C₁-C₄-Alkoxycarbonyl oder C₁-C₄-Alkylcarbonyl substituiertes Mono- oder Di-C₁-C₈-alkylamino oder C₆-C₁₀-Arylamino oder C₁-C₆-Acylamino, gegebenenfalls durch Hydroxy, Halogen, Cyano, Nitro, C₁-C₄-Alkoxy, C₁-C₄-Alkylcarbonyl oder C₁-C₄-Alkoxycarbonyl substituiertes C₁-C₈-Alkylcarbonyl oder C₆-C₁₀-Arylcarbonyl, gegebenenfalls durch Hydroxy, Halogen, Cyano, Nitro, C₁-C₄-Alkoxy, C₁-C₄-Alkylcarbonyl oder C₁-C₄-Alkoxycarbonyl substituiertes C₁-C₈-Monoalkylaminocarbonyl oder C₁-C₈-Dialkylaminocarbonyl oder Aminocarbonyl, gegebenenfalls durch Hydroxy, Halogen, Cyano, Nitro, C₁-C₄-Alkoxy, C₁-C₄-Alkylcarbonyl oder C₁-C₄-Alkoxycarbonyl substituiertes C₁-C₆-Alkylsulfonyl oder C₆-C₁₀-Arylsulfonyl oder Mono- oder Di-C₆-C₁₀-Arylaminosulfonyl oder Aminosulfonyl substituiert sein können, wobei Substituenten in benachbarten Positionen auch gemeinsam einen Ring bilden können,
R² einen gegebenenfalls durch Hydroxy, Halogen, Cyan, Carboxyl, Aminocarbonyl, C₁-C₈-Monoalkylaminocarbonyl, C₁-C₈-Dialkylaminocarbonyl, C₁-C₄-Alkylsulfonyl oder C₁-C₄-Alkoxycarbonyl substituierten C₁-C₈-Alkylrest bedeutet,
K den Rest einer Kupplungskomponente der Formel (II) oder (III) ist, in der
R³ in 2- und/oder 5-Stellung Wasserstoff, Halogen, Nitro, Cyano, einen gegebenenfalls durch Halogen, Cyan, Hydroxy, C₁-C₄-Alkoxy, Carboxyl, Aminocarbonyl, C₁-C₄-Alkylcarbonyl, C₁-C₄-Alkylsulfonyl oder C₁-C₄-Alkoxycarbonyl substituierten C₁-C₈-Alkylrest, einen gegebenenfalls durch Hydroxy, Halogen, Cyano, Nitro, C₁-C₄-Alkoxy, Carboxyl, Aminocarbonyl, C₁-C₄-Alkylcarbonyl oder C₁-C₄-Alkoxycarbonyl substituierten C₁-C₈-Alkoxyrest, einen gegebenenfalls durch Hydroxy, Halogen, Cyano, Nitro, C₁-C₄-Alkoxy, Carboxyl, Aminocarbonyl, C₁-C₄-Alkylcarbonyl oder C₁-C₄-Alkoxycarbonyl substituierten C₁-C₈-Acyloxyrest, einen gegebenenfalls durch Hydroxy, Halogen, Cyano, Nitro, C₁-C₄-Alkoxy, Carboxyl, Aminocarbonyl, C₁-C₄-Alkylcarbonyl oder C₁-C₄-Alkoxycarbonyl substituierten C₁-C₈-Alkoxycarbonylrest bedeutet,
R⁴ und R⁵ unabhängig voneinander jeweils Wasserstoff, einen durch Halogen, Hydroxy, Cyano, Thiocyanato, Nitro, C₁-C₄-Alkoxy, C₆-C₁₀-Aryloxy, Carboxyl, Aminocarbonyl, C₁-C₈-Monoalkylaminocarbonyl, C₁-C₈-Dialkylaminocarbonyl, C₁-C₄-Alkoxycarbonyl, C₁-C₄-Alkylcarbonyl oder C₁-C₈-Acyloxy substituierten C₁-C₈-Alkylrest, einen gegebenenfalls durch Halogen, Cyano, Thiocyanato, Nitro, C₁-C₄-Alkoxy, C₆-C₁₀-Aryloxy, Carboxyl, Aminocarbonyl, C₁-C₈-Monoalkylaminocarbonyl, C₁-C₈-Dialkylaminocarbonyl, C₁-C₄-Alkoxycarbonyl, C₁-C₄-Alkylcarbonyl oder C₁-C₈-Acyloxy substituierten Benzyl- oder Phenethylrest oder einen Phenylrest bedeuten, der gegebenenfalls wie bei R¹ angegeben substituiert sein kann, oder
R⁴ und/oder R⁵ mit R³ in m-Stellung zur Azobrücke zusammen mit dem Stickstoffatom verbunden sein kann und so insgesamt einen gegebenenfalls durch C₁-C₄-Alkyl substituierten Dihydroindol-, Tetrahydrochinolin-, Tetrahydrochinoxalin- oder Dihydro-1,4-benzoxazinring bilden, oder
R⁴ und R⁵ zusammen mit dem dazwischenliegenden Stickstoffatom zu einem gegebenenfalls durch C₁-C₄-Alkyl substituierten Pyrrolidin-, Piperidin-, Morpholin- oder Piperazin-Ring verbunden sind,
R⁶ in Position 5 und 6 Wasserstoff, Halogen, Nitro, Cyano, einen gegebenenfalls durch Halogen, Cyan, Hydroxy, C₁-C₄-Alkoxy, Carboxyl, Aminocarbonyl, C₁-C₄-Alkylcarbonyl oder C₁-C₄-Alkoxycarbonyl substituierten C₁-C₈-Alkylrest bedeutet,
R⁷ Wasserstoff, einen durch Halogen, Hydroxy, Cyano, Nitro, C₁-C₄-Alkoxy, Carboxy, Aminocarbonyl, C₁-C₄-Alkylcarbonyl oder C₁-C₄-Alkoxycarbonyl substituierten C₁-C₈-Alkylrest oder einen gegebenenfalls durch Halogen, C₁-C₄-Alkyl oder C₁-C₄-Alkoxy substituierten Phenylrest bedeutet,
R⁸ Wasserstoff, einen durch Halogen, Hydroxy, Cyano, Nitro, C₁-C₄-Alkoxy, Carboxyl, Aminocarbonyl, C₁-C₄-Alkylcarbonyl oder C₁-C₄-Alkoxycarbonyl substituierten C₁-C₈-Alkylrest oder einen gegebenenfalls durch Halogen, C₁-C₄-Alkyl oder C₁-C₄-Alkoxy substituierten Benzyl- oder Phenethylrest bedeutet und
n und m unabhängig voneinander 1 oder 2 bedeuten,
mit der Bedingung, daß R² nicht für Methyl steht, wenn R¹ Phenyl oder 4-Methoxyphenyl bedeutet.

4. Verfahren zur Herstellung von kationischen 1,3,4-Thiadiazolfarbstoffen des Anspruchs 1, dadurch gekennzeichnet, daß man 2-Amino-1,3,4-thiadiazole der Formel (IV) 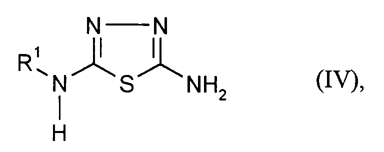 in der R¹ die in Anspruch 1 angegebene Bedeutung hat, diazotiert und auf eine Kupplungskomponente kuppelt und dann mit Verbindungen der Formel (VII)
(R²)X (VII)
in der R² und X die in Anspruch 1 angegebene Bedeutung haben, quarterniert.

5. Verfahren nach Anspruch 4, dadurch gekennzeichnet, daß es sich bei der Kupplungskomponente K um eine Verbindung der Formeln (V) oder (VI) handelt, 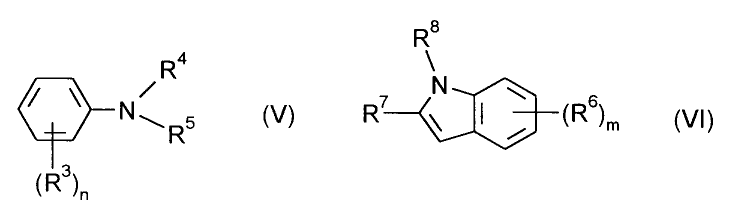 in denen R³, R⁴, R⁵, R⁶, R⁷, R⁸, m und n die in Anspruch 2 angegebene Bedeutung haben.

6. Verwendung von kationischen 1,3,4-Thiadiazolfarbstoffen des Anspruchs 1 zum Färben und Bedrucken von kationisch färbbären Fasern, von tannierten Zellulosematerialien, Papier, Seide und Leder sowie zur Herstellung von Schreibflüssigkeiten, Stempelflüssigkeiten und Kugelschreiberpasten und im Gummidruck.

7. Kationisch gefärbte Fasern, tannierte Zellulosematerialien, Papiere, Seide, Leder, Schreibflüssigkeiten, Stempelflüssigkeiten und Kugelschreiberpasten, dadurch gekennzeichnet, daß sie mindestens einen kationischen 1,3,4-Thiadiazolfarbstoffe des Anspruchs 1 enthalten.
